# EUROPEAN PATENT APPLICATION

(11) **EP 4 368 671 A1**
(43) Date of publication of application: **15.05.2024**
(21) Application number: 22837712.3
(22) Date of filing: 06.07.2022
(51) Int. Cl.: C08L 71/02, C08G 65/32, C08L 71/00, C09J 171/02, C09K 3/10

(54) **CURABLE COMPOSITION, CURED PRODUCT, ADHESIVE, AND SEALING MATERIAL**

(30) Priority: 07.07.2021 JP 2021113011; 04.03.2022 JP 2022033677
(71) Applicant: AGC INC., Chiyoda-ku, Tokyo 1008405 (JP)
(72) Inventor: KONNO Kazuma, Tokyo 100-8405 (JP); ITO Takashi, Tokyo 100-8405 (JP); KAKU Daisuke, Tokyo 100-8405 (JP); SUNAYAMA Yoshitaka, Tokyo 100-8405 (JP)
(74) Representative: Müller-Boré & Partner Patentanwälte PartG mbB
(86) International application number: PCT/JP2022/026865
(87) International publication number: WO 2023/282298

(57) **Abstract**

The present invention relates to a curable composition that includes an oxyalkylene polymer A having an average of 4 to 8 terminal groups per molecule and having a reactive silicon group represented by: -SiXₐR₃₋ₐ (1) (in which R is a monovalent organic group having 1 to 20 carbon atoms and represents an organic group other than a hydrolyzable group, and X represents a halogen atom, a hydroxyl group, or a hydrolyzable group; a is an integer from 1 to 3; when a is 2 or more, X groups may be the same as or different from each other, and when a is 1, R groups may be the same as or different from each other), wherein the terminal group has the reactive silicon group, an unsaturated group, an isocyanate group or an active hydrogen-containing group, and the oxyalkylene polymer A has a hydroxyl group equivalent molecular weight of 500 to 1,750 per terminal group.

## Description

### [Technical Field]

The present invention relates to a curable composition, a cured product, an adhesive, and a sealing material.

Priority is claimed on Japanese Patent Application No. 2021-113011, filed July 7, 2021, and Japanese Patent Application No. 2022-033677, filed March 4, 2022, the contents of which are incorporated herein by reference.

The present invention relates to a curable composition containing a polymer having a halogen atom, a hydroxyl group or a hydrolyzable group bonded to a silicon atom and having a silicon group capable of crosslinking by forming a siloxane bond (hereinafter referred to as a "reactive silicon group").

### [Background Art]

It has been known that a polymer having at least one reactive silicon group within one molecule has a property to crosslink even at room temperature through the formation of siloxane bonds accompanied by a hydrolysis reaction and the like of the reactive silicon group due to hygroscopic moisture or the like, thereby obtaining a rubber-like cured product.

Among these polymers having a reactive silicon group, those in which the main chain skeleton is composed of oxyalkylene polymers, saturated hydrocarbon polymers, alkyl acrylate polymers, and alkyl methacrylate polymers have already been industrially produced and widely used in applications such as sealing materials, adhesives, and coating materials. When a curable composition containing these polymers having a reactive silicon group is used as an adhesive, the curability of the curable composition, elongation of the cured product, and adhesiveness to adherends are important. High modulus and high tensile strength are also required as physical properties of the cured product.

In order to achieve high modulus and high tensile strength in the cured product, it has been known to increase the number of reactive silicon groups in one polymer molecule to increase the crosslinking density.

Patent Document 1 discloses an oxyalkylene polymer having a number average molecular weight of 2,000 to 6,000 and containing an average of 2.1 to 5 reactive silicon groups within one molecule. More specifically, it has been described in Examples that, after converting a terminal hydroxyl group of polyoxypropylene triol having a number average molecular weight of about 4,100 into an allyl group, this allyl group was converted into a dimethoxymethylsilyl group to obtain a polymer having an average of 2.2 reactive silicon groups per molecule and a number average molecular weight of 4,100. It has been described that the above polymer can provide a curable composition that gives a cured product of high hardness as a sealing material composition for general buildings.

Patent Document 2 discloses an oxyalkylene polymer having a number average molecular weight of 2,000 to 6,000 and containing 1.3 or more reactive silicon groups within one molecule. More specifically, it has been described in Examples that, after converting a terminal hydroxyl group of polyoxypropylene triol having a hydroxyl value-based molecular weight of about 3,000 into an allyl group, this allyl group was converted into a dimethoxymethylsilyl group to obtain a polymer having an average of 2.2 reactive silicon groups per molecule and a number average molecular weight of 3,000. It has been described that a curable composition with less residual tackiness can be obtained by containing the above polymer.

### [Citation List]

### [Patent Documents]

[Patent Document 1] International Patent Publication No. 2012/070476
[Patent Document 2] Japanese Unexamined Patent Application, First Publication No. 2012-102154

### [Summary of Invention]

### [Technical Problem]

However, when a curable composition containing the polymer in Patent Document 1 or Patent Document 2 is used as an adhesive, the tensile strength of the cured product may be insufficient. The present invention has been made in view of the above circumstances, and has an object of providing a curable composition from which a cured product having excellent tensile strength can be obtained.

### [Solution to Problem]

The present invention includes the following aspects [1] to [14].
[1] A curable composition containing an oxyalkylene polymer A having an average of 4 to 8 terminal groups per molecule and having a reactive silicon group represented by the following formula (1), wherein the aforementioned terminal group includes the aforementioned reactive silicon group, an unsaturated group, an isocyanate group or an active hydrogen-containing group, and the oxyalkylene polymer A has a hydroxyl group equivalent molecular weight of 500 to 1,750 per terminal group,

   -SiXₐR₃₋ₐ Formula (1)

   [In the formula, R is a monovalent organic group having 1 to 20 carbon atoms and represents an organic group other than a hydrolyzable group, and X represents a halogen atom, a hydroxyl group, or a hydrolyzable group; a is an integer from 1 to 3; when a is 2 or more, X groups may be the same as or different from each other, and when a is 1, R groups may be the same as or different from each other.]
[2] The curable composition according to [1], wherein the aforementioned polymer A has a number average molecular weight of 600 to 2,750 per terminal group.
[3] The curable composition according to [1] or [2], wherein the aforementioned polymer A has an average of 0.5 to 1.0 reactive silicon groups represented by the aforementioned formula (1) per terminal group.
[4] The curable composition according to any one of [1] to [3], wherein the aforementioned polymer A has a silylation rate of 50 to 100 mol%.
[5] The curable composition according to any one of [1] to [4], wherein a content of a repeating unit based on an ethylene oxide monomer is from 0.1 to 30% by mass with respect to a total mass of the aforementioned polymer A.
[6] The curable composition according to any one of [1] to [5], further containing an oxyalkylene polymer B having an average of 2 to 3 terminal groups per molecule and having a reactive silicon group represented by the aforementioned formula (1), wherein the aforementioned terminal group has the aforementioned reactive silicon group, an unsaturated group, an isocyanate group or an active hydrogen-containing group.
[7] The curable composition according to [6], wherein the aforementioned polymer B has an average of 0.1 to 1.0 reactive silicon groups represented by the aforementioned formula (1) per terminal group.
[8] The curable composition according to [6] or [7], wherein the aforementioned polymer B has a hydroxyl group equivalent molecular weight of 1,000 to 100,000.
[9] The curable composition according to any one of [6] to [8], wherein a ratio of a mass of the aforementioned polymer A with respect to a mass of the aforementioned polymer B is from 5/95 to 95/5.
[10] The curable composition according to any one of [1] to [9], further containing an oxyalkylene polymer C having an average of one terminal group within one molecule, a number average molecular weight of 2,000 or more, and a linear structure, wherein the aforementioned terminal group has a reactive silicon group represented by the aforementioned formula (1).
[11] The curable composition according to any one of [1] to [10], further containing a vinyl polymer D having an average of one or more reactive silicon groups represented by the aforementioned formula (1) within one molecule.
[12] A cured product of the curable composition according to any one of [1] to [11].
[13] An adhesive composed of the cured product according to [12].
[14] A sealing material composed of the cured product according to [12].

### [Advantageous Effects of Invention]

Using the curable composition of the present invention, a cured product with excellent tensile strength can be obtained. The cured product of the present invention is excellent in tensile strength.

### [Description of Embodiments]

The meanings and definitions of the terms used in the present specification are as follows.

A numerical range represented by a symbol "-" means a numerical range in which numerical values before and after this symbol "-" are the lower limit and upper limit values.

A "unit" that constitutes a polymer means an atomic group directly formed by polymerization of a monomer.

The term "main chain" means a polymer chain formed by polymerization of two or more monomers. A "main chain" in the oxyalkylene polymer described later means a portion (polyoxyalkylene chain) containing a residue of an initiator and a repeating unit based on an alkylene oxide monomer.

An oxyalkylene polymer is a polymer composed of a main chain and terminal groups.

A "terminal group" of an oxyalkylene polymer means an atomic group containing an oxygen atom closest to the molecular terminal among oxygen atoms in the aforementioned polyoxyalkylene chain. However, if the atomic group contains a residue of an initiator, it is not regarded as a terminal group.

The term "active hydrogen-containing group" refers to at least one group bonded to a carbon atom and selected from the group consisting of a hydroxyl group, a carboxy group, an amino group, a monovalent functional group obtained by removing one hydrogen atom from a primary amine, a hydrazide group, and a sulfanyl group.

An "active hydrogen" refers to a hydrogen atom based on the aforementioned active hydrogen-containing group and a hydrogen atom based on the hydroxyl group of water.

An "unsaturated group" means a monovalent group containing an unsaturated double bond. Unless otherwise specified, it is at least one group selected from the group consisting of a vinyl group, an allyl group and an isopropenyl group.

A "precursor polymer" is a polymer before introduction of a reactive silicon group, and means an oxyalkylene polymer in which a terminal group obtained by polymerizing an alkylene oxide monomer with an active hydrogen of the initiator is a hydroxyl group.

The term "silylation ratio" refers to a ratio of the number of the aforementioned reactive silicon groups with respect to the total number of reactive silicon groups, active hydrogen-containing groups, unsaturated groups, and isocyanate groups in the terminal groups of the oxyalkylene polymer. Silylation rate values can be determined by NMR analysis. Further, when the aforementioned reactive silicon group is introduced into the terminal group of the oxyalkylene polymer with a silylating agent described later, a ratio (mol%) of the number of silyl groups in the added silylating agent with respect to the number of terminal groups may also be used. However, in this case, a diisocyanate compound is used as the polyisocyanate compound in a method (c) described later.

The term "silylating agent" means a compound having a functional group that reacts with an active hydrogen-containing group, an unsaturated group, or an isocyanate group, and a reactive silicon group.

The "number of terminal groups" is a value calculated by a method of directly measuring the unsaturated group concentration, for example, by introducing an unsaturated group into a precursor polymer of an oxyalkylene polymer, followed by titration analysis based on the principle of an iodine value measurement method specified in JIS K 0070 (1992). The "number of terminal groups" in the oxyalkylene polymer is the same number as the number of active hydrogens in the initiator and the number of terminal groups in the precursor polymer, which will be described later.

In the case of a polymer containing a repeating unit based on an alkylene oxide monomer, a "hydroxyl group equivalent molecular weight" is a value obtained by calculating a hydroxyl value of the initiator or precursor polymer based on JIS K 1557 (2007), followed by the calculation using a formula: "56,100/(hydroxyl value) × (the number of active hydrogens in the initiator, or the number of terminal groups in the precursor polymer)".

The hydroxyl group equivalent molecular weight of the oxyalkylene polymer per terminal group can be obtained through calculation by applying the aforementioned hydroxyl value in the precursor polymer to a formula: "56,100/(hydroxyl value of the precursor polymer)". It may also be calculated by producing a calibration curve for the hydroxyl group equivalent molecular weight and Mn determined by GPC measurement in advance, applying the Mn measurement results of the desired polymer to this calibration curve to estimate the hydroxyl group equivalent molecular weight of the polymer, and applying a formula: "(estimated hydroxyl group equivalent molecular weight)/(estimated number of functional groups of polymer)". Regarding the number of functional groups of the polymer, it can be estimated either by estimating the initiator by NMR, or by producing a calibration curve for Mn obtained by GPC measurement and the viscosity of the polymer in advance for each polymer of each functional group and applying the measurement results of the Mn and viscosity of the desired polymer to this calibration curve.

The number average molecular weight (Mn) and mass average molecular weight (Mw) in the present specification are polystyrene equivalent molecular weights measured using GPC with tetrahydrofuran as an eluent and using a polystyrene polymer with a known molecular weight to produce a calibration curve. A molecular weight distribution (Mw/Mn) is a ratio of Mw with respect to Mn.

A curable composition of the present embodiment contains an oxyalkylene polymer (hereinafter referred to as a "polymer A) having an average of 4 to 8 terminal groups per molecule and having a reactive silicon group represented by the following formula (1), wherein the aforementioned terminal group has the aforementioned reactive silicon group, an unsaturated group, an isocyanate group or an active hydrogen-containing group, and a hydroxyl group equivalent molecular weight of the polymer per terminal group is from 500 to 1,750.

The curable composition may further contain an oxyalkylene polymer (hereinafter referred to as a "polymer B") having an average of 2 to 3 terminal groups per molecule and having a reactive silicon group represented by the following formula (1), wherein the aforementioned terminal group has the aforementioned reactive silicon group, a unsaturated group, an isocyanate group or an active hydrogen-containing group.

### <Reactive silicon group>

The reactive silicon group has a halogen atom, a hydroxyl group or a hydrolyzable group bonded to a silicon atom, and may be crosslinked by forming a siloxane bond. The reaction for forming a siloxane bond is accelerated by a curing catalyst. The reactive silicon group in the polymer A is represented by the following formula (1).

-SiXₐR₃₋ₐ Formula (1)

In the above formula (1), R is a monovalent organic group having 1 to 20 carbon atoms and represents an organic group other than a hydrolyzable group.

R is preferably at least one selected from the group consisting of a hydrocarbon group having 1 to 20 carbon atoms and a triorganosiloxy group.

R is preferably at least one selected from the group consisting of an alkyl group, a cycloalkyl group, an aryl group, an α-chloroalkyl group and a triorganosiloxy group, and is more preferably at least one selected from the group consisting of a linear or branched alkyl group having 1 to 4 carbon atoms, a cyclohexyl group, a phenyl group, a benzyl group, an α-chloromethyl group, a trimethylsiloxy group, a triethylsiloxy group and a triphenylsiloxy group. A methyl group or an ethyl group is preferred from the viewpoint of favorable curability of the polymer having a reactive silicon group and favorable stability of the curable composition. An α-chloromethyl group is preferred from the viewpoint that the curing rate of the cured product is high. A methyl group is particularly preferred because it is readily available.

In the above formula (1), X represents a halogen atom, a hydroxyl group, or a hydrolyzable group.

Examples of the hydrolyzable group include an alkoxy group, an acyloxy group, a ketoximate group, an amino group, an amide group, an acid amide group, an aminooxy group, a sulfanyl group, and an alkenyloxy group.

An alkoxy group is preferred because it is moderately hydrolyzable and easy to handle. The alkoxy group is preferably a methoxy group, an ethoxy group or an isopropoxy group, and more preferably a methoxy group or an ethoxy group. When the alkoxy group is a methoxy group or an ethoxy group, a siloxane bond is rapidly formed, a crosslinked structure is easily formed in a cured product, and physical property values of the cured product are likely to be favorable.

In the above formula (1), a is an integer of 1 to 3. When a is 1, R groups may be the same as or different from each other. When a is 2 or more, X groups may be the same as or different from each other. Since the cured product tends to exhibit high modulus and excellent elongation and tensile strength, a is preferably 2 or 3, and a is more preferably 2.

Examples of the reactive silicon group represented by the above formula (1) include a trimethoxysilyl group, a triethoxysilyl group, a triisopropoxysilyl group, a tris(2-propenyloxy)silyl group, a triacetoxysilyl group, a dimethoxymethylsilyl group, a diethoxymethylsilyl group, a dimethoxyethylsilyl group, a methyldiisopropoxysilyl group, an (α-chloromethyl)dimethoxysilyl group, and an (α-chloromethyl)diethoxysilyl group. A trimethoxysilyl group, a triethoxysilyl group, a dimethoxymethylsilyl group, and a diethoxymethylsilyl group are preferred, and a dimethoxymethylsilyl group is more preferred, from the viewpoint of high activity and favorable curability.

### <Polymer A>

The polymer A is an oxyalkylene polymer having an average of 4 to 8 terminal groups per molecule and having a reactive silicon group represented by the following formula (1), wherein the aforementioned terminal group has the aforementioned reactive silicon group, an unsaturated group, an isocyanate group or an active hydrogen-containing group, and a hydroxyl group equivalent molecular weight of the oxyalkylene polymer per terminal group is from 500 to 1,750. Two or more types of polymers A may be used in the curable composition of the present embodiment.

The main chain of the polymer A is a polymer chain composed of an oxyalkylene chain containing a residue of an initiator and a repeating unit based on one or more alkylene oxide monomers (hereinafter, a repeating unit based on a monomer is simply referred to as a "monomer unit", and for example, a repeating unit based on an alkylene oxide monomer is referred to as an "alkylene oxide unit"). In the case of a polymer chain having two or more types of alkylene oxide units, those alkylene oxide units may form a block polymer or a random polymer.

Examples of the oxyalkylene chain include a polymer chain having an ethylene oxide unit, a polymer chain having a propylene oxide unit, a polymer chain having an ethylene oxide unit and a propylene oxide unit, a polymer chain composed of an ethylene oxide unit, a polymer chain composed of a propylene oxide unit, a polymer chain composed of a butylene oxide unit, a polymer chain composed of a tetramethylene oxide unit, a polymer chain composed of an ethylene oxide unit and a propylene oxide unit, and a polymer chain composed of a propylene oxide unit and a butylene oxide unit. A polymer chain having an ethylene oxide unit, a polymer chain having a propylene oxide unit, a polymer chain having an ethylene oxide unit and a propylene oxide unit, a polymer chain composed of a propylene oxide unit, and a polymer chain composed of an ethylene oxide unit and a propylene oxide unit are preferred, and a polymer chain composed of a propylene oxide unit is particularly preferred. Further, when the polymer A has a polymer chain containing an ethylene oxide unit, the content of the ethylene oxide unit with respect to the total mass of the polymer A is preferably from 0.1 to 30% by mass, and more preferably from 10 to 20% by mass. When the content of the ethylene oxide unit in the polymer A is equal to or more than the above lower limit value, it is preferred from the viewpoint of higher curability, and when the content is equal to or less than the above upper limit value, it is preferred from the viewpoint of easily lowering the viscosity. When the polymer A has a polymer chain having an ethylene oxide unit and a propylene oxide unit, or a polymer chain composed of an ethylene oxide unit and a propylene oxide unit, the content of the ethylene oxide unit with respect to the total mass of polymer A is preferably from 0.1 to 30% by mass, and more preferably from 10 to 20% by mass. When the content of the ethylene oxide unit in the polymer A is equal to or more than the above lower limit value, it is preferred from the viewpoint of higher curability, and when the content is equal to or less than the above upper limit value, it is preferred from the viewpoint of easily lowering the viscosity. When the polymer A has a polymer chain having an ethylene oxide unit and a propylene oxide unit, the content of the propylene oxide unit with respect to the total mass of the polymer A is preferably from 50 to 99.9% by mass, and more preferably from 70 to 90% by mass.

The polymer A has an average of 4 to 8 terminal groups per molecule and preferably has an average of 4 to 6 terminal groups per molecule because the cured product exhibits higher tensile strength and better modulus and elongation. The terminal group of the polymer A has any one of the reactive silicon group represented by the above formula (1), an active hydrogen-containing group, an unsaturated group, and an isocyanate group, and preferably has one or more groups selected from the group consisting of the reactive silicon group represented by the above formula (1), a hydroxyl group that bonds to a carbon atom, an unsaturated group, and an isocyanate group. Each of these terminal groups may be the same as or different from each other.

The active hydrogen-containing group is preferably a hydroxyl group that bonds to a carbon atom, an amino group, or a monovalent functional group obtained by removing a hydrogen atom from a primary amine, and more preferably a hydroxyl group that binds to a carbon atom.

The polymer A preferably has an average of 0.5 to 1.0 reactive silicon groups represented by the above formula (1) per terminal group, and more preferably has 0.60 to 0.97 reactive silicon groups. When it is equal to or more than the lower limit value of the above range, the cured product exhibits better tensile strength and higher modulus.

The hydroxyl group equivalent molecular weight of the polymer A per terminal group is from 500 to 1,750, more preferably from 600 to 1,700, still more preferably from 700 to 1,650, and most preferably from 700 to 1,500. When it is equal to or more than the lower limit value of the above range, the elongation properties of the cured product are improved. When it is equal to or less than the upper limit value of the above range, the cured product exhibits better tensile strength and higher modulus.

The hydroxyl group equivalent molecular weight of the polymer A is preferably from 2,000 to 14,000, more preferably from 2,500 to 13,000, and most preferably from 2,500 to 12,000. When it is equal to or more than the lower limit value of the above range, the elongation properties of the cured product are further improved. When it is equal to or less than the upper limit value of the above range, the cured product exhibits better tensile strength and higher modulus.

The molecular weight distribution of the polymer A is preferably 1.8 or less. The molecular weight distribution is preferably small, more preferably from 1.0 to 1.6, still more preferably from 1.02 to 1.5, and particularly preferably from 1.04 to 1.4, since favorable elongation properties can be easily obtained.

The Mn of the polymer A is preferably from 2,400 to 20,000, more preferably from 3,000 to 19,000, still more preferably from 3,000 to 18,000, and particularly preferably from 3,500 to 11,000. When it is equal to or more than the lower limit value of the above range, the elongation properties of the cured product are further improved. When it is equal to or less than the upper limit value of the above range, the cured product exhibits better tensile strength and higher modulus.

The Mn of the polymer A per terminal group obtained by dividing the Mn of the polymer A by the number of terminal groups of the polymer A is preferably from 600 to 3,000, more preferably from 600 to 2,750, still more preferably from 650 to 2,750, and particularly preferably from 700 to 2,100. When it is equal to or more than the lower limit value of the above range, the elongation properties of the cured product are further improved. When it is equal to or less than the upper limit value of the above range, the cured product exhibits better tensile strength and higher modulus.

As one aspect of the present invention, it is preferable that the hydroxyl group equivalent molecular weight of the polymer A per terminal group is from 500 to 1,750, and the Mn of the polymer A per terminal group is from 600 to 2,750.

Examples of methods for producing the polymer A include production methods according to the following methods (a) to (c).
Method (a): a method of converting a hydroxyl group of a precursor polymer to an alkenyloxy group and then reacting an silylating agent capable of introducing a reactive silicon group -SiXₐR₃₋ₐ represented by the above formula (1) into an unsaturated group of the alkenyloxy group to convert the alkenyloxy group into a group having the reactive silicon group represented by the above formula (1);
Method (b): a method of reacting a hydroxyl group of a precursor polymer with a silylating agent having a functional group capable of reacting with the hydroxyl group and a reactive silicon group represented by the above formula (1) to convert the hydroxyl group into a group having the reactive silicon group represented by the above formula (1);
Method (c): a method of converting a hydroxyl group of a precursor polymer into a group having an isocyanate group, and then reacting a silylating agent having a functional group capable of reacting with the isocyanate group and a reactive silicon group represented by the above formula (1) to convert the hydroxyl group into a group having the reactive silicon group represented by the above formula (1).

Examples of the silylating agent used in the method (a) include a compound having both a group capable of forming a bond by reacting with an unsaturated group (for example, a sulfanyl group) and a reactive silicon group represented by the above formula (1), and a hydrosilane compound (for example, HSiXₐR₃₋ₐ, provided that X, R and a are the same as those defined in the aforementioned formula (1)). More specifically, for example, dimethoxymethylsilane, diethoxymethylsilane, dimethoxyethylsilane, methyldiisopropoxysilane, (α-chloromethyl)dimethoxysilane, (α-chloromethyl)diethoxysilane, trimethoxysilane, triethoxysilane, triisopropoxysilane, tris(2-propenyloxy)silane, triacetoxysilane, and 3-mercaptopropyltrimethoxysilane can be exemplified. Trimethoxysilane, dimethoxymethylsilane, and diethoxymethylsilane are preferred, and dimethoxymethylsilane is more preferred, from the viewpoint of high activity and favorable curability.

As the silylating agent used in the method (b), an isocyanate silane compound represented by the following formula (2) is preferred.

OCN-(CH₂)ₙ-SiXₐR₃₋ₐ Formula (2)

-SiXₐR₃₋ₐ in the above formula (2) is the same as defined in the above formula (1). n is an integer from 1 to 8, and preferably from 1 to 3.

By a reaction between the hydroxyl group of the precursor polymer and the above isocyanate silane compound, the hydroxyl group of the precursor polymer is converted into a terminal group having a urethane bond (-O-C(=O)NH-) and -SiXₐR₃₋ₐ, which is represented by -O-C(=O)NH-(CH₂)ₙ-SiXₐR₃₋ₐ.

Examples of the isocyanate silane compound include 3-isocyanatopropyltrimethoxysilane, 3-isocyanatopropyltriethoxysilane, isocyanatomethyltrimethoxysilane, isocyanatomethyltriethoxysilane, 3-isocyanatopropylmethyldimethoxysilane, 3-isocyanatopropylmethyldiethoxysilane, isocyanatomethylmethyldimethoxysilane, and isocyanatomethylmethyldiethoxysilane.

As the isocyanate silane compound, 3-isocyanatopropyltrimethoxysilane, 3-isocyanatopropyltriethoxysilane, 3-isocyanatopropylmethyldimethoxysilane, isocyanatomethylmethyldimethoxysilane and isocyanatomethyltrimethoxysilane are preferred because of their reactivity with the precursor polymer and ease of handling.

This reaction may be performed in the presence of a urethanization catalyst. The urethanization catalyst is not particularly limited, and a known urethanization catalyst can be used as appropriate. Examples thereof include organic tin compounds such as dibutyltin dilaurate and dioctyltin dilaurate, metal catalysts such as bismuth compounds, and base catalysts such as organic amines. The reaction temperature is preferably from 20 to 200°C, and more preferably from 50 to 150°C. Further, the urethanization reaction is preferably carried out under an inert gas atmosphere. Nitrogen is preferred as the inert gas.

In the method (c), the hydroxyl group of the precursor polymer is reacted with a polyisocyanate compound to convert the hydroxyl group into a monovalent organic group containing an isocyanate group (hereinafter also referred to as an "isocyanate-containing group"), and having a urethane bond (-O-C(=O)NH-) on the terminal side of the bond with the precursor polymer, and then the isocyanate-containing group is reacted with a silylating agent having a functional group capable of reacting with the isocyanate group and a reactive silicon group represented by the above formula (1) to form a terminal group which is a monovalent organic group having one or more urethane bonds (-O-C(=O)NH-) and a silylating agent residue that has reacted with the isocyanate group (hereinafter also referred to as "urethane bond and reactive silicon group-containing group").

Hereinafter, the above polyisocyanate compound will be described as a diisocyanate compound represented by the following formula (3) and the silylating agent having a functional group capable of reacting with an isocyanate group and a reactive silicon group represented by the above formula (1) will be described as a compound represented by the following formula (4) to explain the method (c), but are not limited thereto.

OCN-R¹-NCO Formula (3)

R¹ in the above formula (3) represents a divalent organic group.

W-R²-SiXₐR₃₋ₐ Formula (4)

W in the above formula (4) is a functional group capable of reacting with a monovalent isocyanate group (a group having one or more active hydrogens), R² is a divalent organic group, and -SiXₐR₃₋ₐ is the same as defined in the above formula (1).

When the hydroxyl group of the precursor polymer is reacted with the polyisocyanate compound represented by the above formula (3), the above isocyanate-containing group becomes a group represented by -O-C(=O)NH-R¹-NCO. When the above isocyanate-containing group and the silylating agent represented by the above formula (4) are reacted, the above urethane bond and reactive silicon group-containing group becomes a group represented by -O-C(=O)NH-R¹-NHC(=O)-W'-R²-SiXₐR₃₋ₐ (provided that W' is a divalent group obtained by removing one active hydrogen from W). For example, when W is a hydroxyl group, the above urethane bond and reactive silicon group-containing group is a group represented by -O-C(=O)NH-R¹-NHC(=O)-OR²-SiXₐR₃₋ₐ. In this case, the above urethane bond and reactive silicon group-containing group have two urethane bonds.

R¹ is preferably a divalent organic group having 2 to 20 carbon atoms, and examples thereof include an alkylene group, a cycloalkylene group, a bicycloalkylene group, a monocyclic or polycyclic divalent aromatic hydrocarbon group, a divalent group obtained by removing two hydrogen atoms in a cycloalkane having an alkyl group as a substituent, a divalent group obtained by removing two hydrogen atoms in an aromatic hydrocarbon having an alkyl group as a substituent, a divalent group obtained by removing two hydrogen atoms in two or more cycloalkanes which may have an alkyl group as a substituent, bonded via an alkylene group, and a divalent group obtained by removing two hydrogen atoms in two or more aromatic hydrocarbons which may have an alkyl group as a substituent, bonded via an alkylene group.

Examples of the diisocyanate compound represented by the above formula (3) and other polyisocyanate compounds include aromatic polyisocyanates, non-yellowing aromatic polyisocyanates (compounds having no isocyanate group directly bonded to carbon atoms constituting an aromatic ring), aliphatic polyisocyanates and alicyclic polyisocyanates, and urethane modified products, biuret modified products, allophanate modified products, carbodiimide modified products and isocyanurate modified products, which are obtained from the above polyisocyanates.

Examples of the aromatic polyisocyanates include naphthalene-1,5-diisocyanate, polyphenylenepolymethylene polyisocyanate, 4,4'-diphenylmethane diisocyanate, 2,4-tolylene diisocyanate, and 2,6-tolylene diisocyanate.

Examples of the non-yellowing aromatic polyisocyanate include xylylene diisocyanate and tetramethylxylylene diisocyanate.

Examples of the aliphatic polyisocyanate include hexamethylene diisocyanate, 2,2,4-trimethyl-hexamethylene diisocyanate, and 2,4,4-trimethyl-hexamethylene diisocyanate.

Examples of the alicyclic polyisocyanate include isophorone diisocyanate and 4,4'-methylenebis(cyclohexyl isocyanate).

As the polyisocyanate compound, those having two isocyanate groups are preferred, hexamethylene diisocyanate, isophorone diisocyanate, 4,4'-diphenylmethane diisocyanate, 2,4-tolylene diisocyanate, and 2,6-tolylene diisocyanate are preferred, and tolylene diisocyanates are more preferred because higher tensile strength of the cured product can be easily obtained. One type of the polyisocyanate compound may be used, or two or more types thereof may be used in combination.

R² in the silylating agent having a functional group capable of reacting with an isocyanate group represented by the formula (4) and -SiXₐR₃₋ₐ is preferably a divalent organic group having 1 to 20 carbon atoms, more preferably a group obtained by removing two hydrogen atoms from an aromatic hydrocarbon having 6 to 10 carbon atoms, a group obtained by removing two hydrogen atoms from an aromatic hydrocarbon having 6 to 10 carbon atoms substituted with an alkyl group having 1 to 4 carbon atoms, a group obtained by removing two hydrogen atoms from a cyclic hydrocarbon having 3 to 10 carbon atoms, and a group obtained by removing two hydrogen atoms from a linear hydrocarbon having 1 to 12 carbon atoms, still more preferably a group obtained by removing two hydrogen atoms from a linear hydrocarbon having 1 to 8 carbon atoms, and particularly preferably a group obtained by removing two hydrogen atoms from a linear hydrocarbon having 1 to 6 carbon atoms.

W is preferably a group having 1 or 2 active hydrogens selected from a hydroxyl group, a carboxy group, a sulfanyl group, an amino group, and an amino group in which one hydrogen atom is substituted with an alkyl group having 1 to 6 carbon atoms, preferably a hydroxyl group, a sulfanyl group, an amino group, a methylamino group, an ethylamino group and a butylamino group, and more preferably a hydroxyl group, an amino group, a methylamino group, an ethylamino group and a butylamino group.

As the number of groups having the above reactive silicon group to be introduced into the polymer A, as described above, it is preferably those for introducing an average of 0.5 to 1.0, more preferably 0.60 to 0.97, reactive silicon groups per one terminal group, because it is easy to achieve both high modulus and favorable elongation properties of the cured product.

The precursor polymer is an oxyalkylene polymer obtained by ring-opening addition polymerization of an alkylene oxide monomer to an active hydrogen of an initiator having an active hydrogen-containing group in the presence of a ring-opening polymerization catalyst. The number of active hydrogens in the initiator, the number of terminal groups in the precursor polymer, and the number of terminal groups in the polymer A are the same. The precursor polymer is preferably a polymer having a hydroxyl group as a terminal group, which is obtained by ring-opening addition polymerization of an alkylene oxide monomer to an initiator having a hydroxyl group.

As the initiator, an initiator having 4 to 8 active hydrogens is preferred, and an initiator having 4 to 6 active hydrogens is more preferred. The active hydrogen-containing group in the initiator is preferably a hydroxyl group.

Two or more types of initiators may be used in combination. When two or more types of initiators are used in combination, the molar average number of active hydrogens in those initiators should be 4 to 8.

Examples of the initiator having 4 to 8 active hydrogens include pentaerythritol, sucrose, sorbitol, dipentaerythritol, trehalose, diglycerin, and ethylenediamine, and pentaerythritol and sorbitol are preferred from the viewpoint of tensile strength of the cured product.

A conventionally known catalyst can be used as a ring-opening polymerization catalyst during ring-opening addition polymerization of an alkylene oxide monomer to an initiator, and examples thereof include alkali catalysts such as KOH, metal compound-porphyrin complex catalysts such as a complex obtained by reacting an organic aluminum compound with porphyrin, double metal cyanide complex catalysts, and catalysts composed of phosphazene compounds.

A double metal cyanide complex catalyst is preferred because the molecular weight distribution of the polymer A can be narrowed and a curable composition with a low viscosity can be easily obtained. A conventionally known compound can be used as the double metal cyanide complex catalyst, and a known method can be employed as a method for producing a polymer using a double metal cyanide complex. For example, compounds and production methods disclosed in International Patent Publication No. 2003/062301, International Patent Publication No. 2004/067633, Japanese Unexamined Patent Application, First Publication No. 2004-269776, Japanese Unexamined Patent Application, First Publication No. 2005-15786, International Patent Publication No. 2013/065802 and Japanese Unexamined Patent Application, First Publication No. 2015-010162 can be used.

The hydroxyl group equivalent molecular weight of the polymer A per terminal group can be calculated from the hydroxyl group equivalent molecular weight of the precursor polymer before the above reactive silicon groups are introduced by the above methods (a) to (c).

In the precursor polymer of the polymer A, the hydroxyl group equivalent molecular weight of the precursor polymer per terminal group is preferably from 500 to 1,750, more preferably from 600 to 1,700, still more preferably from 700 to 1,650, and most preferably from 700 to 1,500. When it is equal to or more than the lower limit value of the above range, the elongation properties of the cured product are further improved. When it is equal to or less than the upper limit value of the above range, the cured product exhibits better tensile strength and higher modulus.

The hydroxyl group equivalent molecular weight of the precursor polymer is preferably from 2,000 to 14,000, more preferably from 2,500 to 13,000, and still more preferably from 2,500 to 12,000. When it is equal to or more than the lower limit value of the above range, the elongation properties of the cured product are further improved. When it is equal to or less than the upper limit value of the above range, the cured product exhibits better tensile strength and higher modulus.

A silylation rate of the polymer A is preferably from 50 to 100 mol%, and more preferably from 60 to 97 mol%. When the silylation rate is equal to or more than the lower limit value of the above range, the cured product exhibits excellent tensile strength and high modulus.

When the curable composition contains two or more types of polymer A, the average silylation rate of the entire polymer A should be within the above range.

### <Polymer B>

The polymer B is an oxyalkylene polymer having an average of 2 to 3 terminal groups per molecule and having a reactive silicon group represented by the above formula (1), wherein the aforementioned terminal group has the aforementioned reactive silicon group, an unsaturated group, an isocyanate group, or an active hydrogen-containing group. Two or more types of polymers B may be used in the curable composition of the present embodiment.

Examples of the main chain of the polymer B are the same as those of the main chain of the polymer A.

The above reactive silicon group is the same as defined in the above formula (1), and the preferred embodiments are also the same.

A cured product of a curable composition containing a polymer B having an average of 2 to 3 terminal groups per molecule is preferred because it can maintain elongation properties and tensile strength with high modulus, and a cured product of a curable composition containing a polymer B having 3 terminal groups is more preferred.

The terminal group of the polymer B has any one of the reactive silicon group represented by the above formula (1), an active hydrogen-containing group, an unsaturated group, and an isocyanate group, and preferably has one or more groups selected from the group consisting of the reactive silicon group represented by the above formula (1), a hydroxyl group that bonds to a carbon atom, an unsaturated group, and an isocyanate group. Each of these terminal groups may be the same as or different from each other.

With regard to the polymer B, those having an average of 0.1 to 1.0 reactive silicon groups represented by the above formula (1) per terminal group are preferred, and since the cured product tends to exhibit excellent elongation and tensile strength with high modulus, those having 0.30 to 0.97 reactive silicon groups are more preferred, and those having 0.60 to 0.97 reactive silicon groups are particularly preferred.

The hydroxyl group equivalent molecular weight of the polymer B is preferably from 1,000 to 100,000, more preferably from 2,000 to 100,000, still more preferably from 3,000 to 100,000, and particularly preferably from 8,000 to 100,000. When it is equal to or more than the lower limit value of the above range, the elongation properties of the cured product are further improved. When it is equal to or less than the upper limit value of the above range, the cured product exhibits better tensile strength and higher modulus.

The molecular weight distribution of the polymer B is preferably 1.8 or less. The molecular weight distribution is preferably small, more preferably from 1.0 to 1.5, still more preferably from 1.02 to 1.4, and particularly preferably from 1.04 to 1.3, since favorable elongation properties can be easily obtained.

The Mn of the polymer B is preferably from 3,000 to 90,000, more preferably from 3,500 to 90,000, still more preferably from 4,000 to 90,000, and particularly preferably from 12,000 to 90,000. When it is equal to or more than the lower limit value of the above range, the elongation properties of the cured product are improved. When it is equal to or less than the upper limit value of the above range, the cured product exhibits better tensile strength and higher modulus.

The polymer B is preferably obtained by introducing an average of 0.1 to 1.0 reactive silicon groups represented by the above formula (1) per terminal group to the terminal group of the above precursor polymer. Since it is possible to achieve both favorable elongation properties and tensile strength with high modulus of the cured product, those obtained by introducing 0.30 to 0.97 reactive silicon groups are more preferred, and those obtained by introducing 0.60 to 0.97 reactive silicon groups are particularly preferred.

A polymer B having 2 to 3 terminal groups within one molecule can be produced using an initiator having 2 to 3 active hydrogens.

As the compound having 2 to 3 active hydrogens, a compound having 2 to 3 hydroxyl groups is preferred, and a compound having 3 hydroxyl groups is more preferred because it can maintain elongation properties and tensile strength with high modulus. Two or more types of initiators may be used in combination.

Examples of the compound having two hydroxyl groups include ethylene glycol, diethylene glycol, propylene glycol, dipropylene glycol, triethylene glycol, tripropylene glycol, neopentyl glycol, 1,4-butanediol, 1,6-hexanediol, and low molecular weight polyoxypropylene glycols.

Examples of the compound having three hydroxyl groups include glycerin, trimethylolpropane, and trimethylolethane.

Propylene glycol, low molecular weight polyoxypropylene glycols and glycerin are preferred as the compound having 2 to 3 hydroxyl groups, since the cured product tends to exhibit high modulus and excellent elongation and tensile strength.

The precursor polymer of the polymer B can be produced in the same manner as that described for the precursor polymer of the polymer A with the exception that a compound having 2 to 3 active hydrogens is used as an initiator, and a precursor polymer having a hydroxyl group as a terminal group, which is obtained by ring-opening addition polymerization of an alkylene oxide monomer to an initiator having a hydroxyl group, is preferred.

The polymer B can be produced in the same manner as the method for producing the polymer A, with the exception that the precursor polymer of the polymer B is used. That is, as the method for producing the polymer B, production methods according to the above-mentioned methods (a) to (c) can be employed.

The hydroxyl group equivalent molecular weight of the precursor polymer in the polymer B is preferably from 1,000 to 100,000, more preferably from 2,000 to 100,000, still more preferably from 3,000 to 100,000, and particularly preferably from 8,000 to 100,000. When it is equal to or more than the lower limit value of the above range, the elongation properties of the cured product are further improved. When it is equal to or less than the upper limit value of the above range, the cured product exhibits better tensile strength and higher modulus.

A silylation rate of the polymer B is preferably from 10 to 100 mol%, more preferably from 30 to 97 mol%, and still more preferably from 60 to 97 mol%. When the silylation rate of the polymer B is equal to or more than the lower limit value of the above range, the cured product exhibits excellent tensile strength and high modulus.

When the curable composition contains two or more types of polymer B, the average silylation rate of the entire polymer B should be within the above range.

### <Polymer C>

The curable composition of the present embodiment may contain an oxyalkylene polymer C (hereinafter referred to as a "polymer C") having an average of one terminal group within one molecule, a number average molecular weight of 2,000 or more, and a linear structure, wherein the aforementioned terminal group has a reactive silicon group represented by the aforementioned formula (1). One molecular terminal of the polymer C has a structure derived from a residue of an initiator, and the other molecular terminal has a structure derived from the above terminal group. The curable composition of the present embodiment may contain two or more types of polymer C. The polymer C acts as a reactive plasticizer and makes the viscosity of the curable composition lower.

Examples of the main chain of the polymer C are the same as those of the main chain of the polymer A.

With regard to the polymer C, those having an average of more than 0 and 1.0 or less reactive silicon groups represented by the above formula (1) per terminal group are preferred, those having more than 0.5 and 1.0 or less reactive silicon groups are more preferred, those having 0.51 to 0.97 reactive silicon groups are still more preferred, and those having 0.52 to 0.95 reactive silicon groups are particularly preferred.

The hydroxyl group equivalent molecular weight of the polymer C is preferably from 2,000 to 15,000, more preferably from 2,200 to 12,000, and still more preferably from 2,500 to 10,000. When it is equal to or more than the lower limit value of the above range, the cured product exhibits better tensile strength and higher modulus. When it is equal to or less than the upper limit value of the above range, the viscosity is suppressed, and the workability is further improved.

The Mn of the polymer C is preferably from 2,000 to 15,000, more preferably from 2,200 to 12,000, and still more preferably from 2,500 to 10,000. When it is equal to or more than the lower limit value of the above range, the cured product exhibits better tensile strength and higher modulus. When it is equal to or less than the upper limit value of the above range, the viscosity is suppressed, and the workability is further improved.

The molecular weight distribution of the polymer C is preferably 1.8 or less. From the viewpoint of viscosity reduction, the molecular weight distribution is preferably small, more preferably from 1.0 to 1.6, still more preferably from 1.02 to 1.5, and particularly preferably from 1.04 to 1.4.

The polymer C is obtained by introducing an average of more than 0 and 1.0 or less of the aforementioned reactive silicon group per terminal group into a precursor polymer having one terminal group, which is an active hydrogen-containing group.

The residue of an initiator at one molecular terminal of the polymer C is preferably R¹⁰-O-(R¹⁰ is a monovalent hydrocarbon group). R¹⁰ is preferably a branched or linear alkyl group having 1 to 20 carbon atoms, more preferably a branched or linear alkyl group having 1 to 10 carbon atoms, still more preferably a branched or linear alkyl group having 1 to 4 carbon atoms, and particularly preferably a methyl group, an ethyl group, an isopropyl group, an n-propyl group, an n-butyl group or a t-butyl group.

The precursor polymer of the polymer C can be produced in the same manner as that described for the precursor polymer of the polymer A or B, with the exception that an initiator having one active hydrogen is used. Two or more types of initiators may be used in combination.

The active hydrogen-containing group in the initiator is preferably a hydroxyl group. The precursor polymer is preferably a polymer having one hydroxyl group as a terminal group.

A monohydric alcohol having a linear or branched hydrocarbon group is preferred as the initiator having one hydroxyl group. Specific examples thereof include methyl alcohol, ethyl alcohol, 1-propyl alcohol, 2-propyl alcohol, n-butyl alcohol, isobutyl alcohol, 2-butyl alcohol, t-butyl alcohol, 2-ethylhexanol, decyl alcohol, lauryl alcohol, tridecanol, cetyl alcohol, stearyl alcohol, oleyl alcohol, and low molecular weight polyoxyalkylene monools.

As the method for producing the polymer C, a conventionally known method can be used, and the same method as that described for the polymers A and B can be used. That is, as the method for producing the polymer C, production methods according to the above-mentioned methods (a) to (c) can be employed.

The polymer C has an average of one terminal group within one molecule, and this terminal group preferably has the above reactive silicon group, an active hydrogen-containing group, an unsaturated group, or an isocyanate group, and preferably has the above reactive silicon group, a hydroxyl group that binds to a carbon atom, an unsaturated group, or an isocyanate group.

A silylation rate of the polymer C is preferably more than 50 mol% and 100 mol% or less, more preferably from 51 to 97 mol%, and still more preferably from 52 to 95 mol%. When the silylation rate of the polymer C is equal to or more than the lower limit value of the above range, the cured product exhibits better tensile strength and higher modulus.

When the curable composition contains two or more types of polymer C, the average silylation rate of the entire polymer C should be within the above range.

### <Polymer D>

The curable composition of the present embodiment may contain a vinyl polymer (hereinafter referred to as a "polymer D") having an average of one or more reactive silicon groups represented by the above formula (1) within one molecule. The curable composition of the present embodiment may contain two or more types of polymer D. The polymer D contributes to weather resistance, water resistance, and the like.

The reactive silicon group in the polymer D may be introduced at the terminal of the main chain, at the side chain, or at both the terminal of the main chain and the side chain.

The average number of reactive silicon groups per molecule of the polymer D is preferably 0.8 or more. It is preferably 1.0 or more, and more preferably 1.2 or more, from the viewpoint of tensile strength after curing. It is preferably 4.0 or less, and more preferably 3.0 or less, from the viewpoint of favorable elongation of the cured product.

The average number of reactive silicon groups per molecule of the polymer D is calculated by a formula: "(concentration of reactive silicon groups in polymer D [mol/g]) × (number average molecular weight of polymer D)". The concentration [mol/g] of reactive silicon groups in the polymer D can be measured by NMR.

As a monomer constituting the main chain of the polymer D, for example, conventionally known monomers described in Japanese Examined Patent Application, Second Publication No. Hei 3-14068, Japanese Unexamined Patent Application, First Publication No. Hei 6-211922, and Japanese Unexamined Patent Application, First Publication No. Hei 11-130931 can be used.

Examples of the monomer containing a reactive silicon group and an unsaturated group to be copolymerized with the above monomer include vinyldimethoxymethylsilane, vinyldiethoxymethylsilane, vinylmethyldichlorosilane, vinyltrimethoxysilane, vinyltriethoxysilane, vinyltrichlorosilane, tris(2-methoxyethoxy)vinylsilane, 3-(dimethoxymethylsilyl)propyl (meth)acrylate, 3-(trimethoxysilyl)propyl (meth)acrylate, and 3-(triethoxysilyl)propyl (meth)acrylate. Two or more types of these monomers may be used.

The content of the (meth)acrylate monomer is preferably 50% by mass or more, more preferably 70% by mass or more, and may be 100% by mass, with respect to all the monomers constituting the polymer D.

The polymer D can be polymerized by conventionally known polymerization methods described in Japanese Unexamined Patent Application, First Publication No. 2006-257405, Japanese Unexamined Patent Application, First Publication No. 2006-37076, Japanese Unexamined Patent Application, First Publication No. 2008-45059, and the like. Conventionally known materials can be used as secondary materials such as initiators necessary for polymerization, and reaction conditions such as reaction temperature and reaction pressure can also be appropriately selected.

Examples of the polymerization method include a polymerization method using a radical polymerization initiator by solution polymerization, emulsion polymerization, suspension polymerization, or bulk polymerization, and a living radical polymerization method. As the living radical polymerization method, a method using a cobalt porphyrin complex as shown in Journal of American Chemical Society (J. Am. Chem. Soc., 1994, Vol. 116, p. 7943), a method using a nitroxide radical as shown in Published Japanese Translation No. 2003-500378 of the PCT International Publication, and an atom transfer radical polymerization (ATRP) method using an organic halide, a sulfonyl halide compound or the like as an initiator and a transition metal complex as a catalyst as shown in Japanese Unexamined Patent Application, First Publication No. Hei 11-130931 can be exemplified. Polymers obtained by living radical polymerization tend to have narrow molecular weight distributions and low viscosities.

A commercially available polymer D can also be used. As the commercially available products, for example, the XMAP series (names of products manufactured by Kaneka Corporation), ARUFON US-6000 series (for example, US-6110, US-6120, US-6170, and the like, all of which are names of products manufactured by Toagosei Co., Ltd.), Actflow NE series (for example, NE-1000 and NE-3000, both of which are names of products manufactured by Soken Chemical & Engineering Co., Ltd.), and the like can be used.

The Mn of the polymer D is preferably from 500 to 100,000, more preferably from 800 to 80,000, and still more preferably from 1,000 to 60,000. When it is equal to or more than the lower limit value of the above range, the elongation properties and weather resistance of the cured product tend to be excellent, and when it is equal to or less than the upper limit value, the workability is further improved.

The molecular weight distribution of the polymer D is preferably 4.0 or less, and more preferably 3.0 or less. When it is equal to or less than the above upper limit value, the workability is further improved.

### <Polymer E>

The curable composition of the present embodiment may contain a polymer having no reactive silicon group and having a number average molecular weight of 1,000 or more (hereinafter referred to as a "polymer E"). The curable composition of the present embodiment may contain two or more types of polymer E.

The polymer E contributes to a reduction in the contamination on the surface of the cured product, an improvement in the drying properties of the coating material on the surface of the cured product, a reduction in the contamination on the surface of the coating material, and an improvement in the weather resistance of the resin.

The polymer E is preferably at least one selected from the group consisting of a saturated hydrocarbon polymer, a (meth)acrylate polymer and an oxyalkylene polymer.

The saturated hydrocarbon polymer is a polymer in which the main chain contains a unit based on a saturated hydrocarbon monomer, and examples thereof include polyethylene and polypropylene.

Examples of the (meth)acrylate polymer include polymers or copolymers of monomers containing (meth)acrylates such as methyl (meth)acrylate, butyl (meth)acrylate, 2-ethylhexyl (meth)acrylate, lauryl (meth)acrylate and stearyl (meth)acrylate. Examples of commercially available (meth)acrylate polymers include ARUFON UP-1000, ARUFON UP-1110, and ARUFON UP-1171 (all of which are names of products manufactured by Toagosei Co., Ltd.).

Examples of the oxyalkylene polymer include polyether polyols (for example, polyoxyethylene glycol, polyoxypropylene glycol, and polyoxytetramethylene glycol), and ester or ether derivatives obtained by blocking the hydroxyl groups of the above polyether polyols. Examples of commercially available oxyalkylene polymers include Excenol 3020 (EL-3020), Preminol S3011, Preminol S4012, and Preminol S4013F (all of which are names of products manufactured by AGC Inc.).

When the polymer E is an oxyalkylene polymer, the hydroxyl group equivalent molecular weight is preferably from 1,000 to 40,000, more preferably from 1,000 to 35,000, and still more preferably from 1,500 to 30,000. When it is equal to or more than the lower limit value of the above range, bleeding out from the cured product is less likely to occur, and when it is equal to or less than the upper limit value, the viscosity of the curable composition can be lowered, and the workability is further improved. The Mn of the polymer E is preferably from 1,000 to 40,000, more preferably from 1,000 to 35,000, and still more preferably from 1,500 to 30,000. When it is equal to or more than the lower limit value of the above range, bleeding out from the cured product is less likely to occur, and when it is equal to or less than the upper limit value, the viscosity of the curable composition can be lowered, and the workability is further improved.

In the case of a (meth)acrylate polymer, the molecular weight distribution of the polymer E is preferably less than 6.0, more preferably 5.5 or less, and still more preferably 5.0 or less, and in the case of an oxyalkylene polymer, it is preferably less than 2.0, more preferably 1.8 or less, and still more preferably 1.6 or less. When it is equal to or less than the above upper limit value, the workability is further improved.

### <Curable composition>

The curable composition is obtained by mixing the polymer A and other necessary components.

The content of the polymer A with respect to the total mass of the curable composition is preferably from 1 to 50% by mass, more preferably from 1 to 45% by mass, and still more preferably from 2 to 40% by mass. When it is equal to or less than the upper limit value of the above range, the cured product exhibits better tensile strength, and the elongation properties are further improved.

When the curable composition contains the polymer B, the content of the polymer B with respect to the total mass of the curable composition is preferably from 1 to 50% by mass, more preferably from 1 to 45% by mass, and still more preferably from 2 to 40% by mass. When it is equal to or more than the lower limit value of the above range, the elongation properties are further improved. When it is equal to or less than the upper limit value of the above range, the cured product exhibits better tensile strength and higher modulus.

When the curable composition contains the polymer B, the total content of the polymer A and the polymer B with respect to the total mass of the curable composition is preferably from 2 to 70% by mass, more preferably from 3 to 60% by mass, and still more preferably from 4 to 50 % by mass. When it is equal to or more than the lower limit value of the above range, the curability is favorable, and the cured product exhibits excellent tensile strength and high modulus.

When the curable composition contains the polymer B, a ratio of the mass of the polymer A with respect to the mass of the polymer B is preferably from 5/95 to 95/5, more preferably from 10/90 to 90/10, and still more preferably from 20/80 to 80/20. When it is equal to or more than the lower limit value of the above range, the cured product exhibits better tensile strength and higher modulus. When it is equal to or less than the upper limit value of the above range, the elongation properties are further improved.

When the curable composition contains the polymer C, the content of the polymer C with respect to a total of 100 parts by mass of the polymer A is preferably from 1 to 600 parts by mass, more preferably from 5 to 500 parts by mass, and still more preferably from 10 to 300 parts by mass. When it is equal to or less than the upper limit value of the above range, bleeding out from the cured product of the curable composition is likely to be suppressed.

When the curable composition contains the polymer D, the content of the polymer D with respect to a total of 100 parts by mass of the polymer A is preferably from 1 to 600 parts by mass, more preferably from 5 to 500 parts by mass, and still more preferably from 10 to 300 parts by mass. When it is equal to or less than the upper limit value of the above range, the weather resistance of the cured product obtained from the curable composition is further improved.

When the curable composition contains the polymer E, the content of the polymer E with respect to a total of 100 parts by mass of the polymer A is preferably from 1 to 600 parts by mass, more preferably from 5 to 500 parts by mass, and still more preferably from 10 to 300 parts by mass. When it is equal to or less than the upper limit value of the above range, the contamination on the surface of the cured product obtained from the curable composition can be reduced more easily, the drying properties of the coating material on the surface of the cured product are improved more easily, the contamination on the surface of the coating material can be reduced more easily, and the weather resistance of the cured product is further improved.

### [Other components]

Examples of other components described above include curable compounds other than the polymers A to E such as epoxy resins, epoxy resin curing agents, curing catalysts (silanol condensation catalysts), fillers, plasticizers, thixotropic agents, stabilizers, adhesion-imparting agents, physical property modifiers, dehydrating agents, adhesion-imparting resins, reinforcing materials such as fillers, surface modifiers, flame retardants, foaming agents, solvents, and silicates.

Conventionally known components described in International Patent Publication No. 2013/180203, International Patent Publication No. 2014/192842, International Patent Publication No. 2016/002907, Japanese Unexamined Patent Application, First Publication No. 2014-88481, Japanese Unexamined Patent Application, First Publication No. 2015-10162, Japanese Unexamined Patent Application, First Publication No. 2015-105293, Japanese Unexamined Patent Application, First Publication No. 2017-039728, Japanese Unexamined Patent Application, First Publication No. 2017-214541 and the like can be used in combination without limitation as other components. Two or more types of each component may be used in combination.

The curable composition may be a one-component type in which all of the polymer and other components are blended in advance, sealed and stored, and cured by moisture in the air after application; or may be a two-component type in which a main agent composition containing at least a polymer having a reactive silicon group and a curing agent composition containing at least a curing catalyst are stored separately, and the curing agent composition and the main agent composition are mixed before use.

It is preferable that the one-component type curable composition does not contain water. It is preferable to preliminarily dehydrate and dry the added components containing water, or to dehydrate them by reducing the pressure during the mixing and kneading process.

In the two-component type curable composition, the curing agent composition may contain water. Although the main agent composition hardly gels even when it contains a small amount of water, it is preferable to dehydrate and dry the added components in advance from the viewpoint of storage stability.

A dehydrating agent may be added to the one-component type curable composition or the two-component type main agent composition in order to improve the storage stability.

### [Mechanism of action]

Since the curable composition of the present embodiment has a high crosslinking density when the polymer A contained in the composition has an average of 4 to 8 terminal groups per molecule and the hydroxyl group equivalent molecular weight of the polymer per terminal group is from 500 to 1,750, a cured product having favorable tensile strength can be obtained. For this reason, it is particularly useful as an adhesive material that requires high tensile strength.

### [Use]

As applications of the curable composition of the curable composition of the present embodiment, adhesives, sealing materials (for example, elastomeric sealing materials for construction, sealing materials for double glazing, sealing materials for rust prevention and waterproofing of glass edges, sealing materials for back surfaces of solar cells, building sealants, marine sealants, automobile sealants, and road sealants), and electrical insulating materials (insulating coating materials for electric wires and cables) are suitable.

In particular, it is suitable for applications that require favorable tensile strength and elongation properties in cured products, and examples thereof include floor adhesives.

### [Examples]

The present invention will be specifically described below with reference to Examples, but the present invention is not limited by the following description.

### [Hydroxyl group equivalent molecular weight of precursor polymer]

A hydroxyl group equivalent molecular weight of a precursor polymer having a hydroxyl group as a terminal group which was obtained by polymerizing an alkylene oxide with an initiator having a hydroxyl group was calculated based on a formula of "56,100/(hydroxyl value of the precursor polymer) × (the number of active hydrogens in the initiator", using a hydroxyl value calculated based on JIS K 1557 (2007).

### [Number average molecular weight (Mn) and molecular weight distribution (Mw/Mn)]

HLC-8220GPC (name of a product manufactured by Tosoh Corporation) was used as a measuring device. Mw, Mn and Mw/Mn were obtained by using TSKgel Supermultipore HZ-M (name of a product manufactured by Tosoh Corporation) as a column and tetrahydrofuran as a solvent, setting the sample pump at a flow rate of 0.350 mL/min, the reference pump at a flow rate of 0.350 mL/min, the detector temperature to 40°C and the collection time to 6 to 15 minutes, and analyzing the peaks appearing between collection times of 6 and 11 minutes.

### [Silylation rate, number of silyl groups]

When a reactive silicon group was introduced into the terminal group by the method (a) described above, a charged equivalent (molar ratio) of a silylating agent with respect to the amount of unsaturated groups introduced into the terminal group was taken as a silylation rate.

When allyl chloride is used as a reagent for converting the hydroxyl group of the precursor polymer into an alkenyloxy group, in a reaction between the introduced unsaturated groups and the silylating agent, approximately 10 mol% of the unsaturated group does not react with the silylating agent due to a side reaction. Therefore, when reacting with a silylating agent in a number of moles of less than 90 mol% with respect to the number of moles of unsaturated groups, the charged equivalent described above is equal to the silylation rate. On the other hand, when reacting with a silylating agent in a number of moles of 90 mol% or more with respect to the number of moles of unsaturated groups, the silylation rate is 90%.

When a reactive silicon group was introduced into the terminal group by the method (b) described above, with respect to the amount of a hydroxyl group as the terminal group of the precursor polymer, a charged equivalent (molar ratio) of a silylating agent having a functional group capable of reacting with the above hydroxyl group and a reactive silicon group represented by the above formula (1) was taken as a silylation rate.

### [Tensile test]

A curable composition to be measured was filled into a mold having a thickness of 2 mm, cured at a temperature of 23°C and a humidity of 50% for 3 days, and further cured at a temperature of 50°C and a humidity of 65% for 4 days. This preparation condition is indicated as "initial curing". The obtained cured product was punched out with a dumbbell mold to obtain a test piece. This test piece was subjected to a tensile test at a tensile rate of 500 mm/min with a Tensilon testing machine, and modulus (M50, unit: N/mm²) which was the stress when stretched by 50%, tensile strength as the maximum cohesive strength (Tmax, unit: N/mm²) and the maximum point elongation (elongation properties, unit: %) were measured.

In addition, the prepared cured product was cured under the above "initial curing" condition, and then cured at a temperature of 90°C for 7 days. This condition is indicated as "heat resistant curing". The obtained cured product was punched out with a dumbbell mold to obtain a test piece. This test piece was subjected to a tensile test at a tensile rate of 500 mm/min with a Tensilon testing machine, and the modulus (M50, unit: N/mm²), the tensile strength (Tmax, unit: N/mm²) and the maximum point elongation (elongation properties, unit: %) were measured.

The modulus (M50) was evaluated as favorable if it was 0.85 N/mm² or more in "initial curing" and "heat resistant curing". The tensile strength (Tmax) was evaluated as favorable if it was 1.30 N/mm² or more in "initial curing" and "heat resistant curing".

### [Measurement of viscosity]

1 mL of a modified silicone polymer sample obtained after mixing the polymer A and the polymer B was collected, and the viscosity was measured using an E-type viscometer (model: RE80 (product name), manufactured by Toki Sangyo Co., Ltd. product name: RE80 type) under conditions of a measurement temperature of 25°C and a rotor No. 4. As a calibration standard solution, JS14000 (product name, manufactured by Nippon Grease Co., Ltd.) was used.

### [Synthesis of polymer A, polymer a and polymer B]

### (Synthesis Example 1: polymer (A-1))

Propylene oxide was polymerized using a polyoxypropylene polyol having a hydroxyl group equivalent molecular weight of about 550 and having 4 hydroxyl groups as an initiator and a zinc hexacyanocobaltate complex with t-butyl alcohol as a ligand (hereinafter referred to as "TBA-DMC catalyst") as a catalyst to obtain an oxypropylene polymer (precursor polymer P1). The precursor polymer P1 had 4 hydroxyl groups per molecule and had a hydroxyl group equivalent molecular weight of 5,000.

1.15 molar equivalents of a methanol solution of sodium methoxide (concentration: 28% by mass, the same applies hereinafter) was added with respect to the hydroxyl group of the precursor polymer P1. After methanol was distilled off by vacuum degassing, allyl chloride was added in an excess amount with respect to the amount of hydroxyl groups in the precursor polymer P1, and the resulting mixture was reacted at 130°C for 2 hours to convert the hydroxyl groups into allyloxy groups. Then, in the presence of a platinum divinyldisiloxane complex, 0.73 molar equivalents of dimethoxymethylsilane with respect to allyloxy groups were added as a silylating agent. After reacting the resulting mixture at 70°C for 5 hours, the unreacted silylating agent was removed under reduced pressure to obtain an oxypropylene polymer (polymer (A-1)) in which a dimethoxymethylsilyl group was introduced into the terminal group as a reactive silicon group. The number of terminal groups of the polymer (A-1), the hydroxyl group equivalent molecular weight, the hydroxyl group equivalent molecular weight per terminal group (shown in the columns listed under the heading of "molecular weight per terminal group" in the table), the content of ethylene oxide units in the precursor polymer (shown in the columns listed under the heading of "EO content of precursor polymer" in the table), the silylation rate, the average number of reactive silicon groups per molecule, the Mn, and the Mw/Mn are shown in Table 1 (hereinafter, the same applies).

### (Synthesis Example 2: polymer (A-2))

Propylene oxide was polymerized using a polyoxypropylene polyol having a hydroxyl group equivalent molecular weight of about 870 and having 6 hydroxyl groups as an initiator and the TBA-DMC catalyst to obtain an oxypropylene polymer (precursor polymer P2). The precursor polymer P2 had 6 hydroxyl groups per molecule and had a hydroxyl group equivalent molecular weight of 5,000.

An oxypropylene polymer (polymer (A-2)) in which a dimethoxymethylsilyl group was introduced into the terminal group was obtained in the same manner as in Synthesis Example 1, with the exception that the precursor polymer P2 was used instead of the precursor polymer P1, and the amount of dimethoxymethylsilane added was changed to 0.65 molar equivalents with respect to the allyloxy group.

### (Synthesis Example 3: polymer (A-3))

Propylene oxide was polymerized using a polyoxypropylene polyol having a hydroxyl group equivalent molecular weight of about 870 and having 6 hydroxyl groups as an initiator and the TBA-DMC catalyst to obtain an oxypropylene polymer (precursor polymer P3). The precursor polymer P3 had 6 hydroxyl groups per molecule and had a hydroxyl group equivalent molecular weight of 7,500.

An oxypropylene polymer (polymer (A-3)) in which a dimethoxymethylsilyl group was introduced into the terminal group was obtained in the same manner as in Synthesis Example 1, with the exception that the precursor polymer P3 was used instead of the precursor polymer P1, and the amount of dimethoxymethylsilane added was changed to 0.69 molar equivalents with respect to the allyloxy group.

### (Synthesis Example 4: polymer (A-4))

The air inside the reactor containing the precursor polymer P1 was replaced with nitrogen gas, 3-isocyanatopropylmethyldimethoxysilane was added so that a ratio of NCO/(OH of the precursor polymer P1) (molar ratio) was 0.97 while maintaining the internal temperature at 50°C, and dioctyltin bisisooctylthioglycol (Neostann U-860: name of a product manufactured by Nitto Kasei Co., Ltd.) was added as a catalyst. The temperature was raised to 80°C, and the resulting mixture was stirred while maintaining the temperature at 80°C. Analysis was performed using a Fourier transform infrared spectrophotometer, and the reaction was allowed to proceed until completion of the reaction between the hydroxy group and the isocyanate group could be confirmed to obtain an oxypropylene polymer (polymer (A-4)) in which a dimethoxymethylsilyl group was introduced into the terminal group. 0.06 parts by mass of 3-mercaptopropyltrimethoxysilane (KBM-803: name of a product manufactured by Shin-Etsu Chemical Co., Ltd.) as a storage stabilizer was added with respect to 100 parts by mass of the polymer (A-4).

### (Synthesis Example 5: polymer (A-5))

The precursor polymer P1 in Synthesis Example 4 was changed to the precursor polymer P3. Apart from that, an oxypropylene polymer (polymer (A-5)) in which a dimethoxymethylsilyl group was introduced into the terminal group was obtained in the same manner as in Synthesis Example 4. 0.06 parts by mass of KBM-803 was added with respect to 100 parts by mass of the polymer (A-5).

### (Synthesis Example 6: polymer (A-6))

3-isocyanatopropylmethyldimethoxysilane in Synthesis Example 4 was changed to 3-isocyanatopropyltrimethoxysilane. Apart from that, an oxypropylene polymer (polymer (A-6)) in which a trimethoxysilyl group was introduced into the terminal group was obtained in the same manner as in Synthesis Example 4. 0.06 parts by mass of KBM-803 was added with respect to 100 parts by mass of the polymer (A-6).

### (Synthesis Example 7: polymer (A-7))

The precursor polymer P1 in Synthesis Example 4 was changed to the precursor polymer P3, and 3-isocyanatopropylmethyldimethoxysilane in Synthesis Example 4 was changed to 3-isocyanatopropyltrimethoxysilane. Apart from that, an oxypropylene polymer (polymer (A-7)) in which a trimethoxysilyl group was introduced into the terminal group was obtained in the same manner as in Synthesis Example 4. 0.06 parts by mass of KBM-803 was added with respect to 100 parts by mass of the polymer (A-7).

### (Synthesis Example 8: polymer (A-8))

Propylene oxide was polymerized in the presence of potassium hydroxide using a polyoxypropylene polyol having a hydroxyl group equivalent molecular weight of about 870 and having 6 hydroxyl groups as an initiator to obtain an oxypropylene polymer (precursor polymer P8). The precursor polymer P8 had 6 hydroxyl groups per molecule and had a hydroxyl group equivalent molecular weight of 7,500.

An oxypropylene polymer (polymer (A-8)) in which a trimethoxysilyl group was introduced into the terminal group was obtained in the same manner as in Synthesis Example 7, with the exception that the precursor polymer P8 was used instead of the precursor polymer P3. 0.06 parts by mass of KBM-803 was added with respect to 100 parts by mass of the polymer (A-8).

### (Synthesis Example 9: polymer (A-9))

Propylene oxide was polymerized in the presence of potassium hydroxide using a polyoxypropylene polyol having a hydroxyl group equivalent molecular weight of about 1,000 and having 6 hydroxyl groups as an initiator, and then ethylene oxide was polymerized to obtain an oxypropylene oxyethylene polymer (precursor polymer P9). It should be noted that polymerization was carried out so that the content of the repeating unit based on the ethylene oxide monomer with respect to the total mass of the polymer was 13% by mass. The precursor polymer P9 had 6 hydroxyl groups per molecule and had a hydroxyl group equivalent molecular weight of 9,600.

An oxypropylene oxyethylene polymer (polymer (A-9)) in which a trimethoxysilyl group was introduced into the terminal group was obtained in the same manner as in Synthesis Example 7, with the exception that the precursor polymer was changed from P3 to P9. 0.06 parts by mass of KBM-803 was added with respect to 100 parts by mass of the polymer (A-9).

### (Synthesis Example 10: polymer (A-10))

Propylene oxide was polymerized in the presence of potassium hydroxide using a polyoxypropylene polyol having a hydroxyl group equivalent molecular weight of about 1,200 and having 4 hydroxyl groups as an initiator to obtain an oxypropylene oxyethylene polymer (precursor polymer P10). It should be noted that polymerization was carried out so that the content of the repeating unit based on the ethylene oxide monomer with respect to the total mass of the polymer was 15% by mass. The precursor polymer P10 had 4 hydroxyl groups per molecule and had a hydroxyl group equivalent molecular weight of 6,700.

An oxypropylene oxyethylene polymer (polymer (A-10)) in which a trimethoxysilyl group was introduced into the terminal group was obtained in the same manner as in Synthesis Example 7, with the exception that the precursor polymer was changed from P3 to P10. 0.06 parts by mass of KBM-803 was added with respect to 100 parts by mass of the polymer (A-10).

### (Synthesis Example 11: polymer (a-1))

Propylene oxide was polymerized using a polyoxypropylene polyol having a hydroxyl group equivalent molecular weight of about 550 and having 4 hydroxyl groups as an initiator and the TBA-DMC catalyst to obtain an oxypropylene polymer (precursor polymer P11). The precursor polymer P11 had 4 hydroxyl groups per molecule and had a hydroxyl group equivalent molecular weight of 8,000.

An oxypropylene polymer (comparative polymer (a-1)) in which a dimethoxymethylsilyl group was introduced into the terminal group was obtained in the same manner as in Synthesis Example 1, with the exception that the precursor polymer P11 was used instead of the precursor polymer P1, and the amount of dimethoxymethylsilane added was changed to 0.73 molar equivalents with respect to the allyloxy group.

### (Synthesis Example 12: polymer (B-1))

Propylene oxide was polymerized using a polyoxypropylene polyol having a hydroxyl group equivalent molecular weight of about 1,000 and having 3 hydroxyl groups as an initiator and the TBA-DMC catalyst as a catalyst to obtain an oxypropylene polymer (precursor polymer P12). The precursor polymer P12 had 3 hydroxyl groups per molecule and had a hydroxyl group equivalent molecular weight of 10,000.

1.15 molar equivalents of a methanol solution of sodium methoxide (concentration: 28% by mass, the same applies hereinafter) was added with respect to the hydroxyl group of the precursor polymer P12. After methanol was distilled off by vacuum degassing, allyl chloride was added in an excess amount with respect to the amount of hydroxyl groups in the precursor polymer P12, and the resulting mixture was reacted at 130°C for 2 hours to convert the hydroxyl groups into allyloxy groups. Then, in the presence of a platinum divinyldisiloxane complex, 0.66 molar equivalents of dimethoxymethylsilane with respect to allyloxy groups were added as a silylating agent. After reacting the resulting mixture at 70°C for 5 hours, the unreacted silylating agent was removed under reduced pressure to obtain an oxypropylene polymer (polymer (B-1)) in which a dimethoxymethylsilyl group was introduced into the terminal group as a reactive silicon group. Items for the polymer (B-1) that correspond to the items described in Table 1 for the polymer (A-1) are also shown in Table 1 (the same applies hereinafter).

### (Synthesis Example 13: polymer (B-2))

Propylene oxide was polymerized using a polyoxypropylene polyol having a hydroxyl group equivalent molecular weight of about 1,000 and having 3 hydroxyl groups as an initiator and the TBA-DMC catalyst to obtain an oxypropylene polymer (precursor polymer P13). The precursor polymer P13 had 3 hydroxyl groups per molecule and had a hydroxyl group equivalent molecular weight of 24,000.

An oxypropylene polymer (polymer (B-2)) in which a dimethoxymethylsilyl group was introduced into the terminal group was obtained in the same manner as in Synthesis Example 12, with the exception that the precursor polymer P13 was used instead of the precursor polymer P12, and the amount of dimethoxymethylsilane added was changed to 0.85 molar equivalents with respect to the allyloxy group.

### (Synthesis Example 14: polymer (B-3))

Propylene oxide was polymerized using a polyoxypropylene polyol having a hydroxyl group equivalent molecular weight of about 2,000 and having 2 hydroxyl groups as an initiator and the TBA-DMC catalyst to obtain an oxypropylene polymer (precursor polymer P14). The precursor polymer P14 had 2 hydroxyl groups per molecule and had a hydroxyl group equivalent molecular weight of 12,000.

An oxypropylene polymer (polymer (B-3)) in which a dimethoxymethylsilyl group was introduced into the terminal group was obtained in the same manner as in Synthesis Example 12, with the exception that the precursor polymer P14 was used instead of the precursor polymer P12, and the amount of dimethoxymethylsilane added was changed to 0.85 molar equivalents with respect to the allyloxy group.

### (Synthesis Example 15: polymer (B-4))

Propylene oxide was polymerized using a polyoxypropylene polyol having a hydroxyl group equivalent molecular weight of about 1,000 and having 3 hydroxyl groups as an initiator and the TBA-DMC catalyst to obtain an oxypropylene polymer (precursor polymer P15). The precursor polymer P15 had 3 hydroxyl groups per molecule and had a hydroxyl group equivalent molecular weight of 3,000.

An oxypropylene polymer (polymer (B-4)) in which a dimethoxymethylsilyl group was introduced into the terminal group was obtained in the same manner as in Synthesis Example 12, with the exception that the precursor polymer P15 was used instead of the precursor polymer P12, and the amount of dimethoxymethylsilane added was changed to 0.72 molar equivalents with respect to the allyloxy group.

### (Synthesis Example 16: polymer (B-5))

Propylene oxide was polymerized using a polyoxypropylene polyol having a hydroxyl group equivalent molecular weight of about 1,000 and having 3 hydroxyl groups as an initiator and the TBA-DMC catalyst to obtain an oxypropylene polymer (precursor polymer P16). The precursor polymer P16 had 3 hydroxyl groups per molecule and had a hydroxyl group equivalent molecular weight of 5,000.

An oxypropylene polymer (polymer (B-5)) in which a dimethoxymethylsilyl group was introduced into the terminal group was obtained in the same manner as in Synthesis Example 12, with the exception that the precursor polymer P16 was used instead of the precursor polymer P12, and the amount of dimethoxymethylsilane added was changed to 0.72 molar equivalents with respect to the allyloxy group.

### (Synthesis Example 17: polymer (B-6))

The precursor polymer P3 in Synthesis Example 7 was changed to the precursor polymer P15. Apart from that, an oxypropylene polymer (polymer (B-6)) in which a trimethoxysilyl group was introduced into the terminal group was obtained in the same manner as in Synthesis Example 7. 0.06 parts by mass of KBM-803 was added with respect to 100 parts by mass of the polymer (B-6).

### (Synthesis Example 18: polymer (C-1))

Propylene oxide was polymerized using n-butyl alcohol as an initiator in the presence of the TBA-DMC catalyst to obtain a precursor polymer c1 having a hydroxyl group equivalent molecular weight of 5,000. 0.80 molar equivalents of dimethoxymethylsilane were added as a silylating agent with respect to the allyloxy groups of the precursor polymer c1, in which the terminal group on the hydroxyl group side of the precursor polymer c1 was converted to an allyloxy group, and the resulting mixture was reacted at 70°C for 5 hours to obtain an oxypropylene polymer (polymer (C-1)) in which a dimethoxymethylsilyl group was introduced into the terminal group as a reactive silicon group. The polymer (C-1) had a number average molecular weight (Mn) of 8,000 and an Mw/Mn of 1.10.

### (Synthesis Example 19: polymer (D-1))

50 g of isobutanol was added to a pressure-resistant reactor equipped with a stirrer, and the temperature was raised to about 80°C. A mixed solution composed of 1.65 g of methyl methacrylate, 373.1 g of n-butyl acrylate, 110.0 g of stearyl acrylate, 6.5 g of 3-methacryloxypropylmethyldimethoxysilane (KBM-502, product name of Shin-Etsu Silicone Co., Ltd.) and 7.3 g of 2,2'-azobis-2,4-dimethylvaleronitrile (V-65, product name of Wako Pure Chemical Industries, Ltd.) was added dropwise into isobutanol over 2 hours for polymerization, while maintaining the inner temperature of the reaction vessel at about 80°C, under a nitrogen atmosphere, with stirring, to obtain a (meth)acrylate polymer (polymer (D-1)) having dimethoxymethylsilyl groups in side chains.

The average number of reactive silicon groups per molecule was 2.0 as determined by ¹H-NMR analysis. The polymer (D-1) had a number average molecular weight (Mn) of 35,000 and an Mw/Mn of 2.2.

### (Synthesis Example 20: polymer (D-2))

Using a living radical polymerization method, the following polymer D-2 was synthesized by a method of reacting a compound having two alkenyl groups at the end of the polymerization reaction. 8.39 g of cuprous bromide and 112 mL of acetonitrile were added to a 2L flask, and the resulting mixture was heated and stirred at 70°C for 20 minutes under a nitrogen stream. 17.6 g of diethyl 2,5-dibromoadipate, 130 mL of ethyl acrylate, 720 mL of butyl acrylate and 251 g of stearyl acrylate were added thereto, and the resulting mixture was further heated and stirred at 70°C for 40 minutes. 0.41 mL of pentamethyldiethylenetriamine (hereinafter referred to as "triamine") was added thereto to initiate the reaction. Subsequently, heating and stirring were continued at 70°C, and 2.05 mL of triamine was further added. After 330 minutes from the initiation of the reaction, 244 mL of 1,7-octadiene and 4.1 mL of triamine were added, followed by heating and stirring at 70°C, and heating was stopped 570 minutes after the initiation of the reaction. The obtained reaction solution was diluted with toluene and filtered, and the filtrate was subjected to a heat treatment under reduced pressure to obtain an acrylate polymer (polymer (d1)) having an alkenyl group at the terminal. The polymer (d1) had an Mn of 22,800 and a molecular weight distribution of 1.40, and an average number of alkenyl groups per molecule of the polymer (d1) determined by ¹H-NMR analysis was 2.8.

Under a nitrogen atmosphere, the total amount of the obtained polymer (d1), 17.2 g of potassium acetate, and 700 mL of N,N-dimethylacetamide methyl (hereinafter referred to as "DMAc") were added to a 2 L flask, and the resulting mixture was heated and stirred at 100°C for 10 hours. The reaction solution was heated under reduced pressure to remove DMAc, and toluene was added thereto, followed by filtration. The filtrate was heated under reduced pressure to remove volatile matter, the remainder was added to a 2 L flask, 100 g of an adsorbent (a mixture of Kyowaad 500SN and Kyowaad 700SN (both of which are names of products manufactured by Kyowa Chemical Industry Co., Ltd.) in a mass ratio of 1:1) was added thereto, and the resulting mixture was heated and stirred at 130°C for 9 hours under a nitrogen stream. The resulting mixture was diluted with toluene, filtered to remove the adsorbent, and the toluene in the filtrate was distilled off under reduced pressure to obtain a polymer (polymer (d2)).

700 g of the polymer (d2), 22.2 mL of dimethoxymethylhydrosilane, 7.71 mL of methyl orthoformate and a platinum catalyst (a 1,1,3,3-tetramethyl-1,3-divinyldisiloxane complex of zerovalent platinum) was added to a 1 L pressure-resistant reactor. However, the amount of the platinum catalyst used was 9 × 10-3 molar equivalents with respect to the alkenyl groups of the polymer (d2). The mixture in the reactor was heated and stirred at 100°C for 195 minutes. Volatile matter in the mixture was distilled off under reduced pressure to obtain a polymer having a dimethoxymethylsilyl group at its terminal group (polymer (D-2)).

The average number of reactive silicon groups per molecule was 2.0 as determined by ¹H-NMR analysis. The polymer (D-2) had a number average molecular weight (Mn) of 28,000 and an Mw/Mn of 1.7.

### [Other components]

The additives listed in Tables 2, 6 and 7 are as follows.
WHITON SB: heavy calcium carbonate, name of a product manufactured by Shiraishi Calcium Kaisha, Ltd.
HAKUENKA CCR (CCR): colloidal calcium carbonate, name of a product manufactured by Shiraishi Calcium Kaisha, Ltd.
Vinycizer 90 (DINP): diisononyl phthalate, name of a product manufactured by Kao Corporation
DINCH: 1,2-cyclohexane dicarboxylic acid diisononyl ester, name of a product manufactured by BASF Corporation
EL-3020: a polyether polyol having a hydroxyl group equivalent molecular weight of 1,500 per hydroxyl group and having two hydroxyl groups within one molecule, name of a product manufactured by AGC Inc.
UP-1110: acrylic polymer, name of a product manufactured by Toagosei Co., Ltd.
Epikote 828: epoxy resin, name of a product manufactured by Mitsubishi Chemical Corporation
Epicure H3: epoxy resin curing agent, name of a product manufactured by Mitsubishi Chemical Corporation
DMP-30: epoxy resin curing agent, 2,4,6-tris(dimethylaminomethyl)phenol, name of a product manufactured by FUJIFILM Wako Pure Chemical Corporation
Disparlon 6500: hydrogenated castor oil-based thixotropic agent, name of a product manufactured by Kusumoto Chemicals, Ltd.
IRGANOX 1010: hindered phenolic antioxidant, name of a product manufactured by BASF Corporation
TINUVIN 326: benzotriazole-based light stabilizer, name of a product manufactured by BASF Corporation
KBM-1003: vinyltrimethoxysilane, name of a product manufactured by Shin-Etsu Chemical Co., Ltd.
KBM-403: 3-glycidyloxypropyltrimethoxysilane, name of a product manufactured by Shin-Etsu Chemical Co., Ltd.
KBM-603: 3-(2-aminoethylamino)propyltrimethoxysilane, name of a product manufactured by Shin-Etsu Chemical Co., Ltd.
DBTDL: dibutyltin dilaurate
U-220H: dibutyltin bis(acetylacetonate), name of a product manufactured by Nitto Kasei Co., Ltd.
U-810: dioctyltin catalyst, name of a product manufactured by Nitto Kasei Co., Ltd.
TC-750: titanium diisopropoxybis(ethylacetoacetate), name of a product manufactured by Matsumoto Fine Chemical Co., Ltd.

### [Preparation of curable composition]

Cases 1 to 9, 13, 14, 17, 18 and 20 to 42 are Examples of the present invention, and Cases 10 to 12, 15, 16 and 19 are Comparative Examples.

### (Cases 1 to 26)

Curable compositions were prepared using reactive silicon group-containing polymers added in amounts (parts by mass) shown in Tables 3 and 4 and additives added in amounts (parts by mass) shown in Table 2. The added amount of each component shown in Table 2 is a value with respect to a total of 100 parts by mass of the polymer A or the comparative polymer a and the polymer B (Tables 3 and 4), or a value (unit: parts by mass) with respect to a total of 100 parts by mass of the polymer A, the polymer B, the polymer C and the polymer D (Table 5). It should be noted that the added amounts of the polymers (A-4) to (A-10) and (B-6) in Tables 3 to 5 indicate the amounts added as compositions obtained by adding 0.06 parts by mass of KBM-803 with respect to 100 parts by mass of each of the polymers (A-4) to (A-10) and (B-6). A tensile property test was performed using the obtained curable compositions. The results are shown in Tables 3 to 5.

### (Cases 27 to 42)

Curable compositions were prepared by respectively changing the additives in Cases 1 to 4 in Table 3 to additives 5 to 8 in Table 2 and evaluated in the same manner as above. Cases 27 to 30 are cases in which the additive 5 was added, Cases 31 to 34 are cases in which the additive 6 was added, Cases 35 to 38 are cases in which the additive 7 was added, and Cases 39 to 42 are cases in which the additive 8 was added. All the obtained cured products had favorable modulus (M50) and favorable tensile strength (Tmax) in the above tensile test.

**[Table 1]**

| Name | Number of terminal groups | Hydroxyl group equivalent molecular weight | Molecular weight per terminal group | EO content of precursor polymer | Silylation rate | Average number of reactive silicon groups per molecule | Mn | Mw/Mn |
|---|---|---|---|---|---|---|---|---|
| | | | | (% by mass) | (mol%) | | | |
| Polymer (A-1) | 4 | 5,000 | 1,250 | 0 | 73 | 2.9 | 7,400 | 1.12 |
| Polymer (A-2) | 6 | 5,000 | 833 | 0 | 65 | 3.9 | 7,300 | 1.13 |
| Polymer (A-3) | 6 | 7,500 | 1,250 | 0 | 69 | 4.1 | 8,100 | 1.27 |
| Polymer (A-4) | 4 | 5,000 | 1,250 | 0 | 97 | 3.9 | 8,200 | 1.17 |
| Polymer (A-5) | 6 | 7,500 | 1,250 | 0 | 97 | 5.8 | 9,000 | 1.33 |
| Polymer (A-6) | 4 | 5,000 | 1,250 | 0 | 97 | 3.9 | 8,200 | 1.20 |
| Polymer (A-7) | 6 | 7,500 | 1,250 | 0 | 97 | 5.8 | 8,700 | 1.37 |
| Polymer (A-8) | 6 | 7,500 | 1,250 | 0 | 97 | 5.8 | 8,600 | 1.40 |
| Polymer (A-9) | 6 | 9,600 | 1,600 | 13 | 97 | 5.8 | 13,000 | 116 |
| Polymer (A-10) | 4 | 6,700 | 1,675 | 15 | 97 | 3.9 | 11,000 | 1.26 |
| Polymer (a-1) | 4 | 8,000 | 1,000 | 0 | 73 | 2.9 | 12,000 | 1.15 |
| Polymer (B-1) | 3 | 10,000 | 3,333 | 0 | 66 | 2.0 | 15,000 | 1.23 |
| Polymer (B-2) | 3 | 24,000 | 8,000 | 0 | 85 | 2.6 | 30,000 | 1.17 |
| Polymer (B-3) | 2 | 12,000 | 6,000 | 0 | 85 | 1.7 | 16,000 | 1.10 |
| Polymer (B-4) | 3 | 3,000 | 1,000 | 0 | 72 | 2.2 | 4,600 | 1.07 |
| Polymer (B-5) | 3 | 5,000 | 1,667 | 0 | 72 | 2.2 | 6,900 | 1.08 |
| Polymer (B-6) | 3 | 3,000 | 1,000 | 0 | 97 | 2.9 | 5,100 | 1.12 |

**[Table 2]**

| | Product name | Additive 1 | Additive 2 | Additive 3 | Additive 4 | Additive 5 | Additive 6 | Additive 7 | Additive 8 | Additive 9 |
|---|---|---|---|---|---|---|---|---|---|---|
| Filler | WHITON SB | 75 | 75 | 100 | 100 | 75 | 75 | 75 | 75 | 100 |
| | CCR | 75 | 75 | 100 | 100 | 75 | 75 | 75 | 75 | 100 |
| Plasticizer | DINP | 40 | 40 | 90 | 90 | - | - | - | 40 | - |
| | DINCH | - | - | - | - | 40 | - | - | - | - |
| | EL-3020 | - | - | - | - | - | 40 | - | - | 90 |
| | UP-1110 | - | - | - | - | - | - | 40 | - | - |
| Epoxy resin | Epikote 828 | - | - | - | - | - | - | - | - | 50 |
| Epoxy curing agent | Epicure H3 | - | - | - | - | - | - | - | - | 27 |
| Thixotropic agent | Disparlon 6500 | 3 | 3 | 3 | 3 | 3 | 3 | 3 | 3 | 3 |
| Antioxidant | IRGANOX 1010 | 1 | 1 | 1 | 1 | 1 | 1 | 1 | 1 | 1 |
| Ultraviolet absorber | Tinurvin 326 | 1 | 1 | 1 | 1 | 1 | 1 | 1 | 1 | 1 |
| Dehydrating agent | KBM-1003 | 3 | 3 | 3 | 3 | 3 | 3 | 3 | 3 | 3 |
| Adhesion-imparting agent | KBM-403 | 1 | 1 | 1 | 1 | 1 | 1 | 1 | 1 | 1 |
| | KBM-603 | 1 | 1 | 1 | 1 | 1 | 1 | 1 | 1 | 1 |
| Catalyst | DBIDL | 2 | - | - | - | 2 | 2 | 2 | - | - |
| | U-220H | - | 0.5 | - | 0.5 | - | - | - | - | - |
| | U-810 | - | - | 0.35 | - | - | - | - | - | 0.35 |
| | TC-750 | - | - | - | - | - | - | - | 2 | - |

**[Table 3]**

| | | | | Case 1 | Case 2 | Case 3 | Case 4 | Case 5 | Case 6 | Case 7 | Case 8 | Case 9 | Case 10 | Case 11 | Case 12 | Case 13 | Case 14 | Case 15 |
|---|---|---|---|---|---|---|---|---|---|---|---|---|---|---|---|---|---|---|
| Curable composition | Polymer A | Polymer (A-1) | | 30 | 50 | - | - | - | - | - | - | - | - | - | - | - | 30 | - |
| | | Polymer (A-2) | | - | - | 30 | - | - | - | - | - | - | - | - | - | - | - | - |
| | | Polymer (A-3) | | - | - | - | 30 | - | - | - | - | - | - | - | - | 20 | - | - |
| | | Polymer (A-4) | | - | - | - | - | 30 | - | - | - | - | - | - | - | - | - | - |
| | | Polymer (A-5) | | - | - | - | - | - | 30 | - | - | - | - | - | - | - | - | - |
| | | Polymer (A-6) | | - | - | - | - | - | - | 30 | - | - | - | - | - | - | - | - |
| | | Polymer (A-7) | | - | - | - | - | - | - | - | 30 | - | - | - | - | - | - | - |
| | | Polymer (A-8) | | - | - | - | - | - | - | - | - | 30 | - | - | - | - | - | - |
| | Comparative polymer a | Polymer (a-1) | | - | - | - | - | - | - | - | - | - | - | - | 30 | - | - | - |
| | Polymer B | Polymer (B-1) | | 70 | 50 | 70 | 70 | 70 | 70 | 70 | 70 | 70 | 70 | 70 | 70 | - | - | - |
| | | Polymer (B-2) | | - | - | - | - | - | - | - | - | - | - | - | - | 80 | - | - |
| | | Polymer (B-3) | | - | - | - | - | - | - | - | - | - | - | - | - | - | 70 | 70 |
| | | Polymer (B-4) | | - | - | - | - | - | - | - | - | - | 30 | - | - | - | - | 30 |
| | | Polymer (B-5) | | - | - | - | - | - | - | - | - | - | - | 30 | - | - | - | - |
| Additive | | | | Additive 1 | Additive 1 | Additive 1 | Additive 1 | Additive 1 | Additive 1 | Additive 3 | Additive 3 | Additive 3 | Additive 1 | Additive 1 | Additive 1 | Additive 2 | Additive 1 | Additive 1 |
| Physical property evaluation | Polymer viscosity (A + B) | | Pa·s | 1.9 | 13 | 21 | 22 | 27 | 2.9 | 2.7 | 29 | 2.8 | 1.6 | 2.1 | 2.3 | 12.7 | 3.5 | 2.9 |
| | Tensile properties (initial curing) | M50 | N/mm² | 1.17 | 1.37 | 1.20 | 1.20 | 1.23 | 1.26 | 1.41 | 1.45 | 1.31 | 1.06 | 0.92 | 0.94 | 0.92 | 0.87 | 0.79 |
| | | Tmax | N/mm² | 1.46 | 1.43 | 1.49 | 1.44 | 1.53 | 1.51 | 1.56 | 1.54 | 1.47 | 1.27 | 1.22 | 1.24 | 1.74 | 1.42 | 1.24 |
| | | Elongation properties | % | 92 | 51 | 83 | 80 | 83 | 72 | 62 | 54 | 64 | 91 | 117 | 121 | 206 | 171 | 161 |
| | Tensile properties (heat resistant curing) | M50 | N/mm² | 1.14 | 1.36 | 1.21 | 1.14 | 1.12 | 1.11 | 1.18 | 1.28 | 1.16 | 1.06 | 0.93 | 0.95 | 0.94 | 0.88 | 0.83 |
| | | Tmax | N/mm² | 1.45 | 1.45 | 1.53 | 1.47 | 1.44 | 1.44 | 1.46 | 1.47 | 1.42 | 1.24 | 1.22 | 1.26 | 1.88 | 1.51 | 1.29 |
| | | Elongation properties | % | 97 | 57 | 95 | 89 | 87 | 80 | 65 | 60 | 72 | 82 | 115 | 132 | 218 | 194 | 156 |

**[Table 4]**

| | | | | Case 16 | Case 17 | Case 18 | Case 19 | Case 20 | Case 21 |
|---|---|---|---|---|---|---|---|---|---|
| Curable composition | Polymer A | Polymer (A-1) | | - | 100 | - | - | - | - |
| | | Polymer (A-2) | | - | - | - | - | - | - |
| | | Polymer (A-3) | | - | - | 100 | - | - | - |
| | | Polymer (A-4) | | - | - | - | - | - | - |
| | | Polymer (A-5) | | - | - | - | - | - | - |
| | | Polymer (A-6) | | - | - | - | - | - | - |
| | | Polymer (A-7) | | - | - | - | - | - | - |
| | | Polymer (A-8) | | - | - | - | - | - | - |
| | | Polymer (A-9) | | - | - | - | - | 30 | - |
| | | Polymer (A-10) | | - | - | - | - | - | 30 |
| | Comparative polymer a | Polymer (a-1) | | - | - | - | - | - | - |
| | Polymer B | Polymer (B-1) | | 100 | - | - | - | 70 | 70 |
| | | Polymer (B-2) | | - | - | - | - | - | - |
| | | Polymer (B-3) | | - | - | - | - | - | - |
| | | Polymer (B-4) | | - | - | - | - | - | - |
| | | Polymer (B-5) | | - | - | - | 100 | - | - |
| Additive | | | | Additive 4 | Additive 4 | Additive 4 | Additive 4 | Additive 3 | Additive 3 |
| Physical property evaluation | Polymer viscosity (A + B) | | Pa·s | 3.00 | 0.60 | 1.00 | 0.90 | 2.71 | 2.86 |
| | Tensile properties (initial curing) | M50 | N/mm² | 0.84 | - | - | - | 1.21 | 1.14 |
| | | Tmax | N/mm² | 1.11 | 1.48 | 1.46 | 1.26 | 1.37 | 1.35 |
| | | Elongation properties | % | 133 | 31 | 28 | 39 | 59 | 59 |
| | Tensile properties (heat resistant curing) | M50 | N/mm² | 0.77 | - | - | - | 1.27 | 1.20 |
| | | Tmax | N/mm² | 1.15 | 1.58 | 1.56 | 1.29 | 1.50 | 1.38 |
| | | Elongation properties | % | 139 | 34 | 31 | 40 | 61 | 60 |

As shown in Table 3 or Table 4, in Cases 1 to 9, 13, 14, 20, and 21 provided high modulus and excellent tensile strength (Tmax) were obtained. As shown in Table 4, although M50 could not be measured in Cases 17 to 19 since the elongation did not reach 50%, excellent tensile strength (Tmax) was obtained in Cases 17 and 18. As shown in Table 3 or Table 4, the tensile strength (Tmax) was inferior in Cases 10, 11, 15, 16 and 19 which did not contain the polymer A and contained the polymer (B-1), (B-3), (B-4) or (B-5) having only 3 or less terminal groups within one molecule. The tensile strength (Tmax) was inferior in Case 12 which did not contain the polymer A and contained the polymer (a-1) having 4 terminal groups within one molecule and having a hydroxyl group equivalent molecular weight of the following oxyalkylene polymer A of 2,000 per terminal group.

**[Table 5]**

| | | | | Case 22 | Case 23 | Case 24 | Case 25 | Case 26 |
|---|---|---|---|---|---|---|---|---|
| Curable composition | Polymer A | Polymer (A-7) | | 30 | 30 | 30 | 30 | 50 |
| | Polymer B | Polymer (B-1) | | 70 | 50 | 50 | 50 | 50 |
| | Polymer C | Polymer (C-1) | | - | - | - | - | 10 |
| | Polymer D | Polymer (D-1) | | - | 20 | 20 | - | - |
| | | Polymer (D-2) | | - | - | - | 20 | - |

| Additive | | | | Additive 9 | Additive 9 | Additive 3 | Additive 3 | Additive 3 |
|---|---|---|---|---|---|---|---|---|
| Physical property evaluation | Polymer viscosity (A + B) | | Pa·s | 2.9 | 2.9 | 3.0 | 3.0 | 3.0 |
| | Tensile properties (initial curing) | M50 | N/mm² | - | - | 1.30 | 1.35 | 1.38 |
| | | Tmax | N/mm² | 2.36 | 2.30 | 1.39 | 1.41 | 1.45 |
| | | Elongation properties | % | 34 | 40 | 57 | 60 | 60 |
| | Tensile properties (heat resistant curing) | M50 | N/mm² | - | - | 1.15 | 1.20 | 1.20 |
| | | Tmax | N/mm² | 2.25 | 2.15 | 1.33 | 1.39 | 1.40 |
| | | Elongation properties | % | 38 | 45 | 63 | 65 | 68 |

As shown in Table 5, high modulus and excellent tensile strength (Tmax) were obtained in Case 26, which further contained the polymer (C-1). In Cases 22 and 23, by using the epoxy resin or the epoxy resin and the polymer (D-1) together in the formulation (additive 9), although M50 could not be measured since the elongation did not reach 50%, excellent tensile properties (Tmax) were obtained. Furthermore, as shown in Cases 24 and 25, high modulus and excellent tensile properties (Tmax) were obtained even in the formulations using the polymer (D-1) and the polymer (D-2).

### (Reference Examples 1 and 2)

As Reference Examples 1 and 2, additives shown in Table 6 were added to the polymer (A-7) and the polymer (B-6), and measurement of tack-free time and a deep-part curability test were carried out by the following methods. The results are shown in Table 6.

### [Tack-free time measurement]

It was evaluated in accordance with the method described in JIS A 1439 (2016) 5.19 "Skin-over time test". A shorter time means a faster curing rate.

### [Deep-part curability test]

A cylindrical polyethylene tube having an inner diameter of 24 mm and a height of 55 mm was allowed to stand so that one opening was brought into contact with an aluminum plate. In an atmosphere of a temperature of 23°C and a relative humidity of 50%, the curable compositions obtained in Reference Examples 1 and 2 were filled into the inside of the tube from the other opening so as not to introduce bubbles. The curable composition protruding from the other opening described above of the tube filled with the curable composition was scraped off with a spatula to flatten the surface of the curable composition at the end portion of the tube, thereby obtaining a test specimen. The obtained test specimen was allowed to stand in the above atmosphere, and the degree of curing from the surface towards the inside of the curable composition was examined after 1 day, 3 days, and 7 days. More specifically, a surface layer where the curable composition was cured (cured portion) was collected with a spatula, the uncured curable composition attached to the collected cured portion was removed, and the thickness (unit: mm) of the obtained cured portion (height direction of the tube) was measured using a vernier caliper. The collected cured portion often had a cylindrical shape, and the thickest portion of the cured portion was measured in the measurement. The larger the thickness of the cured portion, the superior the deep-part curability.

**[Table 6]**

| | | | Ref. Ex. 1 | Ref. Ex. 2 |
|---|---|---|---|---|
| Curable composition | Polymer (A-7) | | 100 | - |
| | Polymer (B-6) | | - | 100 |
| | Vinyltrimethoxysilane (KBM-1003: name of product manufactured by Shin-Etsu Chemical Co., Ltd.) | | 0.5 | 0.5 |
| | Dioctyltin diversatate (Neostann U-830: name of product manufactured by Nitto Kasei Co., Ltd.) | | 1.0 | 1.0 |
| Physical property evaluation | Tack-free time [min] | | 60 | 130 |
| | Deep-part curability [mm] | After 1 day | 6 | 4 |
| | | After 4 days | 8 | 6 |
| | | After 7 days | 9 | 6 |

As shown in Table 6, when comparing the polymer (A-7) and the polymer (B-6) having approximately the same hydroxyl group equivalent molecular weight per terminal group and the same terminal group structure, the polymer (A-7) having 6 terminal groups had a shorter tack-free time and a faster curing rate in the deep-part curing test than those of the polymer (B-6) having 3 terminal groups.

### (Reference Example 3)

As Reference Example 3, the above tensile test was performed using a curable composition obtained by adding an additive as shown in Table 7 to the polymer (A-7) and the polymer (B-3). A curable composition was obtained by the method for preparing a two-component curable composition. More specifically, a curable composition was prepared by separately preparing an agent A as a main agent and an agent B as a curing agent in advance by adding a reactive silicon group-containing polymer and an additive in amounts (parts by mass) shown in Table 7, and then mixing these agents. The unit of the added amount of each component shown in Table 7 is "parts by mass". It should be noted that the added amount of the polymer (A-7) in Table 7 indicates the amount added as a composition obtained by adding 0.06 parts by mass of KBM-803 with respect to 100 parts by mass of the polymer (A-7).

**[Table 7]**

| | | Product name | Reference Example 3 |
|---|---|---|---|
| Agent A | Polymer A | Polymer (A-7) | 30 |
| | Polymer B | Polymer (B-3) | 70 |
| | Epoxy resin curing agent | DMP-30 | 5 |
| | Adhesion-imparting agent | KBM-603 | 2 |
| Agent B | Epoxy resin | Epikote 828 | 50 |
| | Catalyst | U-220H | 2 |
| | - | Water | 0.5 |

It was confirmed that the curable composition obtained by the above method for preparing a two-component curable composition cured in a favorable manner, and that the obtained cured product had a favorable tensile strength (Tmax) in the above tensile test.

## Claims

1. A curable composition comprising an oxyalkylene polymer A having an average of 4 to 8 terminal groups per molecule and having a reactive silicon group represented by the following formula (1),
wherein said terminal group comprises said reactive silicon group, an unsaturated group, an isocyanate group, or an active hydrogen-containing group, and
the oxyalkylene polymer A has a hydroxyl group equivalent molecular weight of 500 to 1,750 per terminal group,
-SiXₐR₃₋ₐ Formula (1)
[wherein R is a monovalent organic group having 1 to 20 carbon atoms and represents an organic group other than a hydrolyzable group, and X represents a halogen atom, a hydroxyl group, or a hydrolyzable group; a is an integer from 1 to 3; when a is 2 or more, X groups may be the same as or different from each other, and when a is 1, R groups may be the same as or different from each other.]

2. The curable composition according to Claim 1, wherein said polymer A has a number average molecular weight of 600 to 2,750 per terminal group.

3. The curable composition according to Claim 1 or 2, wherein said polymer A has an average of 0.5 to 1.0 reactive silicon groups represented by said formula (1) per terminal group.

4. The curable composition according to Claim 1 or 2, wherein said polymer A has a silylation rate of 50 to 100 mol%.

5. The curable composition according to Claim 1 or 2, wherein a content of a repeating unit based on an ethylene oxide monomer is from 0.1 to 30% by mass with respect to a total mass of said polymer A.

6. The curable composition according to Claim 1, further comprising an oxyalkylene polymer B having an average of 2 to 3 terminal groups per molecule and having a reactive silicon group represented by said formula (1),
wherein said terminal group comprises said reactive silicon group, an unsaturated group, an isocyanate group, or an active hydrogen-containing group.

7. The curable composition according to Claim 6, wherein said polymer B has an average of 0.1 to 1.0 reactive silicon groups represented by said formula (1) per terminal group.

8. The curable composition according to Claim 6 or 7, wherein said polymer B has a hydroxyl group equivalent molecular weight of 1,000 to 100,000.

9. The curable composition according to Claim 6 or 7, wherein a ratio of a mass of said polymer A with respect to a mass of said polymer B is from 5/95 to 95/5.

10. The curable composition according to Claim 1 or 6, further comprising an oxyalkylene polymer C having an average of one terminal group within one molecule, a number average molecular weight of 2,000 or more, and a linear structure,
wherein said terminal group comprises a reactive silicon group represented by said formula (1).

11. The curable composition according to Claim 1 or 6, further comprising a vinyl polymer D having an average of one or more reactive silicon groups represented by said formula (1) within one molecule.

12. A cured product of the curable composition according to Claim 1 or 2.

13. An adhesive comprising the cured product according to Claim 12.

14. A sealing material comprising the cured product according to Claim 12.
